# FASCICULE DE BREVET EUROPEEN

(11) **EP 4 251 660 B1**
(45) Date de publication et mention de la délivrance du brevet: **01.01.2025**
(21) Numéro de dépôt: 21824617.1
(22) Date de dépôt: 19.11.2021
(51) Int. Cl.: C08F 10/02, C08F 4/54

(54) **SYSTÈME CATALYTIQUE À BASE D'UN MÉTALLOCÈNE DE TERRE RARE ET D'UN CO-CATALYSEUR AYANT PLUSIEURS LIAISONS CARBONE MAGNÉSIUM**
KATALYSATORSYSTEM AUF BASIS EINES SELTENERDMETALLOCENS UND EINES COKATALYSATORS MIT MEHREREN KOHLENSTOFF-MAGNESIUM-BINDUNGEN
CATALYST SYSTEM BASED ON A RARE-EARTH METALLOCENE AND A CO-CATALYST HAVING A PLURALITY OF CARBON-MAGNESIUM BONDS

(30) Priorité: 24.11.2020 FR 2012078
(43) Date de publication de la demande: 04.10.2023
(73) Titulaire: Compagnie Générale des Etablissements Michelin, 63000 Clermont-Ferrand (FR); Centre National de la Recherche Scientifique, 75794 Paris Cedex 16 (FR); Ecole Supérieure de Chimie Physique Electronique de Lyon, 69616 Villeurbanne Cedex (FR); Université Claude Bernard Lyon 1, 69622 Villeurbanne Cedex (FR)
(72) Inventeur: NGO, Robert, 63040 CLERMONT-FERRAND Cedex 9 (FR); BAULU, Nicolas, 63040 CLERMONT-FERRAND Cedex 9 (FR); BOISSON, Christophe, 01390 TRAMOYES (FR); D'AGOSTO, Franck, 69740 GENAS (FR); JEAN-BAPTISTE-DIT-DOMINIQUE, François, 63040 CLERMONT-FERRAND Cedex 9 (FR); THUILLIEZ, Julien, 63040 CLERMONT-FERRAND Cedex 9 (FR)
(74) Mandataire: M.F.P. Michelin
(86) Numéro de dépôt international: PCT/FR2021/052044
(87) Numéro de publication internationale: WO 2022/112691

(56) Documents cités:
- WO-A2-2007/054224
- WO-A2-2007/054224
- WEHMSCHULTE RUDOLF. J. ET AL: "Synthesis and Characterization of an Unsolvated Dimeric Diarylmagnesium Compound and Its Magnesium Iodide Byproducts", INORGANIC CHEMISTRY, vol. 40, no. 23, 12 October 2001 (2001-10-12), Easton , US, pages 6004 - 6008, XP055823422, ISSN: 0020-1669, DOI: 10.1021/ic010513m
- SHIONO TAKESHI ET AL: "11. Synthesis and Application of Terminally Magnesium Bromide-Functionalized Isotactic Poly (Propene)", vol. 89, 12 March 1994 (1994-03-12), NL, pages 119 - 128, XP055823117, ISSN: 0167-2991, Retrieved from the Internet <URL:http://dx.doi.org/10.1016/S0167-2991(08)63027-X> DOI: 10.1016/S0167-2991(08)63027-X
- WEHMSCHULTE RUDOLF. J. ET AL: "Synthesis and Characterization of an Unsolvated Dimeric Diarylmagnesium Compound and Its Magnesium Iodide Byproducts", INORGANIC CHEMISTRY, vol. 40, no. 23, 12 October 2001 (2001-10-12), Easton , US, pages 6004 - 6008, XP055823422, ISSN: 0020-1669, DOI: 10.1021/ic010513m
- SHIONO TAKESHI ET AL: "11. Synthesis and Application of Terminally Magnesium Bromide-Functionalized Isotactic Poly (Propene)", vol. 89, 12 March 1994 (1994-03-12), NL, pages 119 - 128, XP055823117, ISSN: 0167-2991, Retrieved from the Internet <URL:http://dx.doi.org/10.1016/S0167-2991(08)63027-X> DOI: 10.1016/S0167-2991(08)63027-X

## Description

Le domaine de la présente invention est celui des systèmes catalytiques utilisables dans la préparation de polyoléfines téléchéliques.

La synthèse de polyoléfine par polymérisation d'une oléfine en présence d'un système catalytique comprenant un métallocène de terre rare et un co-catalyseur est bien connue. Le co-catalyseur est utilisé pour activer le métallocène vis-à-vis de la polymérisation. Le co-catalyseur peut être un organolithien, un organomagnésien ou un organoaluminique, comme cela est par exemple décrit dans les demandes de brevet EP 1 092 731, WO 2004035639, WO 2007054224 et WO 2018224776. Lorsque le co-catalyseur est un organomagnésien, il est typiquement un chlorure d'un organomagnésien ou un organomagnésien dans lequel l'atome de magnésium est lié à deux groupes aliphatiques, comme le dibutylmagnésium, le butyléthylmagnésium et le butyloctylmagnésium.

Il est également connu que la synthèse de polyoléfines fonctionnelles à partir de ces systèmes catalytiques nécessite une étape de fonctionnalisation. Cette étape de fonctionnalisation est subséquente à la réaction de polymérisation et est mise en oeuvre par l'ajout d'un agent de modification, généralement en fin de polymérisation. Cette première méthode permet la fonctionnalisation d'une seule extrémité de chaîne du polymère. Une alternative à cette première méthode a été de proposer d'utiliser des agents de transfert fonctionnels à la place des co-catalyseurs. Ces agents de transfert fonctionnels décrits dans les demandes de brevet WO2016092237 et WO2013135314 sont par exemple des organomagnésiens qui portent une fonction amine, éther ou vinyle. Cette alternative permet bien de supprimer l'étape supplémentaire de fonctionnalisation après la réaction de polymérisation pour former des polymères fonctionnels. Mais cette alternative conduit, comme la première méthode, à la fonctionnalisation d'une seule extrémité de chaîne du polymère, à moins de procéder à une étape supplémentaire de fonctionnalisation en fin de polymérisation. Il existe donc une préoccupation de trouver une solution qui permet de préparer des polyoléfines fonctionnalisées à ses deux extrémités de chaîne selon un procédé qui soit efficace et plus simple.

Les Demanderesses ont découvert un système catalytique qui permet la préparation de polymères téléchéliques par un procédé efficace et simple. Le système catalytique a pour caractéristique de comprendre un métallocène de terre rare et un co-catalyseur organomagnésien particulier qui contient deux atomes de magnésium liés chacun à un atome de carbone distinct et constitutif d'un noyau benzénique distinct substitué de façon spécifique.

Ainsi, un premier objet de l'invention est un système catalytique à base au moins :
d'un métallocène de formule (la) ou (Ib),
d'un organomagnésien à titre de co-catalyseur,

   {P(Cp¹)(Cp²)Y} (Ia)

   Cp³Cp⁴Y (Ib)

   Y désignant un groupe comportant un atome d'une terre rare,
   Cp¹, Cp², Cp³ et Cp⁴, identiques ou différents, étant choisis dans le groupe constitué par les groupes fluorényles, les groupes cyclopentadiényles et les groupes indényles, les groupes étant substitués ou non substitués,
   P étant un groupe pontant les deux groupes Cp¹ et Cp², et comprenant un atome de silicium ou de carbone,
   l'organomagnésien étant un composé de formule (II)

      R^{B}-(Mg-R^{A})ₘ-Mg-R^{B} (II)

      R^{B} étant différent de R^{A},
      R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle,
      R^{A} étant une chaîne divalente hydrocarbonée aliphatique, interrompue ou non par un ou plusieurs atomes d'oxygène ou de soufre ou bien par un ou plusieurs groupes arylènes,
      m étant un nombre supérieur ou égal à 1, de préférence égal à 1.

Un deuxième objet de l'invention est un procédé de préparation d'un premier polymère téléchélique qui comprend une étape de polymérisation d'un monomère M en présence d'un système catalytique conforme à l'invention, le monomère M étant choisi dans le groupe des monomères constitués par les 1,3-diènes, l'éthylène, les α-monooléfines et leurs mélanges. Le premier polymère téléchélique a la particularité de porter à chacune de ses extrémités un groupe terminal ayant une liaison carbone-magnésium réactive.

Un troisième objet de l'invention est un procédé de préparation d'un deuxième polymère téléchélique qui comprend une étape de polymérisation d'un monomère M en présence d'un système catalytique conforme à l'invention, laquelle étape de polymérisation est suivie d'une étape de fonctionnalisation avec un agent de modification, le monomère M étant choisi dans le groupe des monomères constitués par les 1,3-diènes, l'éthylène, les α-monooléfines et leurs mélanges. Le deuxième polymère téléchélique a la particularité de porter à chacune de ses extrémités un groupe fonctionnel.

L'invention concerne également un polymère téléchélique de formule R^{B}-Mg-poly-R^{A}-poly-Mg- R^{B}, R^{A} et R^{B} étant définis comme précédemment, la dénomination « poly » dans la formule désignant une chaîne polymère d'un 1,3-diène, d'éthylène, d'une α-monooléfine ou de leurs mélanges. Le polymère téléchélique conforme à l'invention est susceptible d'être obtenu par un procédé conforme à l'invention, deuxième objet de l'invention.

L'invention porte aussi sur un procédé de préparation d'un polymère qui comprend une étape de polymérisation d'un monomère M en présence d'un système catalytique conforme à l'invention et une réaction de terminaison avec un composé protique, le monomère M étant choisi dans le groupe des monomères constitués par les 1,3-diènes, l'éthylène, les α-monooléfines et leurs mélanges.

### Description

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Sauf indication contraire, les taux des unités résultant de l'insertion d'un monomère dans un polymère sont exprimés en pourcentage molaire par rapport à la totalité des unités monomères qui constituent le polymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.

Par l'expression « à base de » utilisée pour définir les constituants du système catalytique, on entend le mélange de ces constituants, ou le produit de la réaction d'une partie ou de la totalité de ces constituants entre eux.

Dans la présente demande, on entend par métallocène un complexe organométallique dont le métal, en l'espèce l'atome de terre rare, est lié à deux groupes Cp³ et Cp⁴ ou à une molécule de ligand constitué de deux groupes Cp¹ et Cp² reliés entre eux par un pont P. Ces groupes Cp¹, Cp², Cp³ et Cp⁴, identiques ou différents, sont choisis dans le groupe constitué par les groupes fluorényles, les groupes cyclopentadiényles et les groupes indényles, ces groupes pouvant être substitués ou non substitués. On rappelle que les terres rares sont des métaux et désignent les éléments scandium, yttrium et les lanthanides dont le numéro atomique varie de 57 à 71.

Selon une première variante de l'invention, le métallocène utilisé comme constituant de base dans le système catalytique conforme à l'invention répond à la formule (la)

{P(Cp¹)(Cp²)Y} (la)

dans laquelle
Y désigne un groupe comportant un atome d'une terre rare,
Cp¹ et Cp², identiques ou différents, sont choisis dans le groupe constitué par les groupes fluorényles, les groupes cyclopentadiényles et les groupes indényles, les groupes étant substitués ou non substitués,
P est un groupe pontant les deux groupes Cp¹ et Cp², et comprenant un atome de silicium ou de carbone.

Selon une deuxième variante de l'invention, le métallocène utilisé comme constituant de base dans le système catalytique conforme à l'invention répond à la formule (Ib)

Cp³Cp⁴Y (Ib)

dans laquelle
Y désigne un groupe comportant un atome d'une terre rare,
Cp³ et Cp⁴, identiques ou différents, sont choisis dans le groupe constitué par les groupes fluorényles, les groupes cyclopentadiényles et les groupes indényles, les groupes étant substitués ou non substitués.

A titre de groupes cyclopentadiényles, fluorényles et indényles substitués, on peut citer ceux substitués par des radicaux alkyles ayant 1 à 6 atomes de carbone ou par des radicaux aryles ayant 6 à 12 atomes de carbone ou encore par des radicaux trialkylsilyles tels que SiMe₃. Le choix des radicaux est aussi orienté par l'accessibilité aux molécules correspondantes que sont les cyclopentadiènes, les fluorènes et indènes substitués, parce que ces derniers sont disponibles commercialement ou facilement synthétisables.

A titre de groupes fluorényles substitués, on peut citer ceux substitués en position 2,7, 3 ou 6, particulièrement le 2,7-ditertiobutyle-fluorényle, le 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

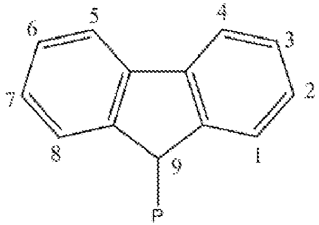

A titre de groupes cyclopentadiényles substitués, on peut citer ceux substitués aussi bien en position 2 (ou 5) qu'en position 3 (ou 4), particulièrement ceux substitués en position 2, plus particulièrement le groupe tétraméthylcyclopentadiènyle. La position 2 (ou 5) désigne la position de l'atome de carbone qui est adjacent à l'atome de carbone auquel est attaché le pont P, comme cela est représenté dans le schéma ci-après.

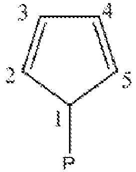

A titre de groupes indényles substitués, on peut citer particulièrement ceux substitués en position 2, plus particulièrement le 2-méthylindényle, le 2-phénylindényle. La position 2 désigne la position de l'atome de carbone qui est adjacent à l'atome de carbone auquel est attaché le pont P, comme cela est représenté dans le schéma ci-après.

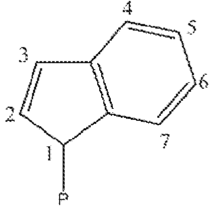

De préférence, le métallocène est de formule (la).

Selon un mode de réalisation préférentiel de l'invention, Cp¹ et Cp² sont identiques et sont choisis dans le groupe constitué par les groupes fluorényles substitués et le groupe fluorényle non substitué de formule C₁₃H₈. Le système catalytique selon ce mode de réalisation préférentiel a la particularité de conduire à des copolymères de butadiène et d'éthylène qui comprennent en plus des unités monomères éthylène et des unités butadiène des unités cycliques, unités 1,2-cyclohexane de formule suivante :

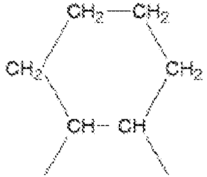

Les unités cycliques résultent d'une insertion particulière des monomères éthylène et 1,3-butadiène dans la chaîne polymère, en plus des unités conventionnelles d'éthylène et de 1,3-butadiène, respectivement -(CH₂-CH₂)-, -(CH₂-CH=CH-CH₂)- et -(CH₂-CH(C=CH₂))-. Le mécanisme d'obtention d'une telle microstructure est par exemple décrit dans le document Macromolecules 2009, 42, 3774-3779.

Avantageusement, Cp¹ et Cp² sont identiques et représentent chacun un groupe fluorényle non substitué de formule C₁₃H₈, représenté par le symbole Flu.

Selon un mode de réalisation préférentiel de l'invention, le symbole Y représente le groupe Met-G, avec Met désignant l'atome de la terre rare et G désignant un groupe comprenant le motif borohydrure BH₄ ou désignant un atome d'halogène choisi dans le groupe constitué par le chlore, le fluor, le brome et l'iode. Avantageusement, G désigne un atome de chlore ou le groupe de formule (III) :

(BH₄)_{(1+y)-}L_{y}-Nₓ (III)

dans laquelle
L représente un métal alcalin choisi dans le groupe constitué par le lithium, le sodium et le potassium,
N représente une molécule d'un éther,
x, nombre entier ou non, est égal ou supérieur à 0,
y, nombre entier, est égal ou supérieur à 0.

Très avantageusement, G désigne le groupe de formule (III).

Comme éther convient tout éther qui a le pouvoir de complexer le métal alcalin, notamment le diéthyléther et le tétrahydrofurane.

Selon l'un quelconque des modes de réalisation de l'invention, le métal du métallocène utile au besoin de l'invention, en l'espèce la terre rare, est de préférence un lanthanide dont le numéro atomique va de 57 à 71, de manière plus préférentielle le néodyme, Nd.

Le pont P reliant les groupes Cp¹ et Cp² répond de préférence à la formule ZR¹R², dans laquelle Z représente un atome de silicium ou de carbone, R¹ et R², identiques ou différents, représentent chacun un groupe alkyle comprenant de 1 à 20 atomes de carbone, de préférence un méthyle. Dans la formule ZR¹R², Z représente avantageusement un atome de silicium, Si.

Le métallocène utile à la synthèse du système catalytique peut se trouver sous la forme de poudre cristallisée ou non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 ou WO 2007054223. Le métallocène peut être préparé de façon traditionnelle par un procédé analogue à celui décrit dans la demande de brevet WO 2007054224 ou WO 2007054223, notamment par réaction dans des conditions inertes et anhydres du sel d'un métal alcalin du ligand avec un borohydrure de terre rare dans un solvant adapté, tel un éther, comme le diéthyléther ou le tétrahydrofurane ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Selon un mode de réalisation particulièrement préférentiel, le métallocène est de formule (III-1), (III-2), (III-3), (III-4) ou (III-5) :

[Me₂Si(Flu)₂Nd(µ-BH₄)₂Li(THF)] (III-1)

[{Me₂SiFlu₂Nd(µ-BH₄)₂Li(THF)}₂] (III-2)

[Me₂SiFlu₂Nd(µ-BH₄)(THF)] (III-3)

[{Me₂SiFlu₂Nd(µ-BH₄)(THF)}₂] (III-4)

[Me₂SiFlu₂Nd(µ-BH₄)] (III-5)

dans laquelle Flu représente le groupe C₁₃H₈.

Un autre constituant de base du système catalytique conforme à l'invention est le co-catalyseur, un organomagnésien de formule (II) dans laquelle R^{B} est différent de R^{A}, R^{B} comprend un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle, R^{A} est une chaîne divalente hydrocarbonée aliphatique, interrompue ou non par un ou plusieurs atomes d'oxygène ou de soufre ou bien par un ou plusieurs groupes arylènes, m est un nombre supérieur ou égal à 1, de préférence égal à 1.

R^{B}-(Mg-R^{A})ₘ-Mg-R^{B} (II)

L'organomagnésien de formule (II) a donc pour caractéristique de comprendre deux atomes de magnésium, chaque atome de magnésium étant lié à deux atomes de carbone. Dans l'organomagnésien de formule (II), deux atomes de magnésium partagent chacun une première liaison avec un premier atome de carbone appartenant à R^{B} et une deuxième liaison avec un deuxième atome de carbone appartenant à R^{A}. Le premier atome de carbone est constitutif du noyau benzénique de R^{B}. Le deuxième atome de carbone est constitutif de la chaîne hydrocarbonée aliphatique R^{A} qui peut contenir au sein de sa chaîne un ou plusieurs hétéroatomes choisis parmi l'oxygène et le soufre ou bien un ou plusieurs groupes arylènes. Dans le cas préférentiel où m est égal à 1, chaque atome de magnésium partage donc une première liaison avec un premier atome de carbone de R^{B} et une deuxième liaison avec un deuxième atome de carbone de R^{A}.

R^{B} a pour caractéristique essentielle de comprendre un noyau benzénique substitué par l'atome de magnésium. Les deux atomes de carbone du noyau benzénique de R^{B} en ortho du magnésium portent un substituant, identique ou différent. Alternativement l'un des deux atomes de carbone du noyau benzénique de R^{B} en ortho du magnésium peut porter un substituant, l'autre atome de carbone du noyau benzénique de R^{B} en ortho du magnésium peut former un cycle. Le substituant est un méthyle, un éthyle ou un isopropyle. Dans le cas où l'un des 2 atomes de carbone du noyau benzénique de R^{B} en ortho du magnésium est substitué par un isopropyle, de préférence le deuxième atome de carbone du noyau benzénique de R^{B} en ortho du magnésium n'est pas substitué par un isopropyle. De préférence, les atomes de carbone du noyau benzénique de R^{B} en ortho du magnésium sont substitués par un méthyle ou un éthyle. De manière plus préférentielle, les atomes de carbone du noyau benzénique de R^{B} en ortho du magnésium sont substitués par un méthyle.

Selon un mode de réalisation préférentiel de l'invention, le composé organomagnésien répond à la formule (IV-m) dans laquelle m est supérieur ou égal à 1, R₁ et R₅, identiques ou différents, représentent un méthyle ou un éthyle, de préférence un méthyle, R₂, R₃ et R₄, identiques ou différents, représentent un atome d'hydrogène ou un alkyle et R^{A} est une chaîne divalente hydrocarbonée aliphatique, interrompue ou non par un ou plusieurs atomes d'oxygène ou de soufre ou bien par un ou plusieurs groupes arylènes. De préférence, R₁ et R₅ représentent un méthyle. De préférence, R₂ et R₄ représentent un atome hydrogène.

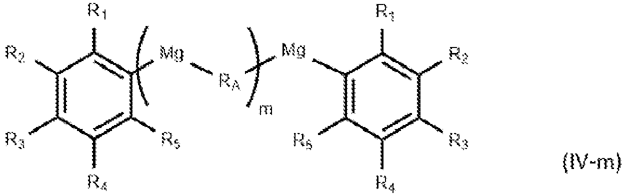

Le composé organomagnésien de formule (IV-m) est de formule (IV-1) dans le cas où m est égal à 1.

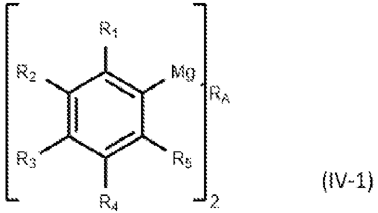

Selon une variante préférentielle, R₁, R₃ et R₅ sont identiques dans la formule (IV-m), notamment dans la formule (IV-1). Selon une variante plus préférentielle, R₂ et R₄ représentent un hydrogène et R₁, R₃ et R₅ sont identiques. Dans une variante davantage préférentielle, R₂ et R₄ représentent un hydrogène et R₁, R₃ et R₅ représentent un méthyle.

Dans les formules (II) et (IV-m), en particulier dans la formule (IV-1), R^{A} est une chaîne divalente hydrocarbonée aliphatique divalente qui peut contenir au sein de sa chaîne un ou plusieurs hétéroatomes choisis parmi l'oxygène et le soufre ou bien un ou plusieurs groupes arylènes. De préférence, R^{A} est un alcanediyle, ramifiée ou linéaire, un cycloalcanediyle ou un radical xylènediyle. De manière plus préférentielle, R^{A} est un alcanediyle. De préférence, R^{A} contient 3 à 10 atomes de carbone, en particulier 3 à 8 atomes de carbone. De manière encore plus préférentielle, R^{A} est un alcanediyle ayant 3 à 10 atomes de carbone. Avantageusement, R^{A} est un alcanediyle ayant 3 à 8 atomes de carbone. Très avantageusement, R^{A} est un alcanediyle linéaire. Comme groupe R^{A} conviennent tout particulièrement le 1,3-propanediyle, le 1,4-butanediyle, le 1,5-pentanediyle, le 1,6-hexanediyle, le 1,7-heptanediyle, le 1,8-octanediyle.

Selon l'un quelconque des modes de réalisation de l'invention, m est préférentiellement égal à 1 dans la formule (II), en particulier dans la formule (IV-m).

Le composé organomagnésien utile aux besoins de l'invention comme co-catalyseur peut être préparé par un procédé, qui comprend la réaction d'un premier organomagnésien de formule XMg-R^{A}-MgX avec un deuxième organomagnésien de formule R^{B}-Mg-X, X représentant un atome d'halogène, préférentiellement de brome ou de chlore, R^{B} et R^{A} étant tels que définis précédemment. X est plus préférentiellement un atome de brome. La stoechiométrie utilisée dans la réaction détermine la valeur de m dans la formule (II) et dans la formule (IV-m). Par exemple un ratio molaire de 0,5 entre la quantité du premier organomagnésien et la quantité du deuxième organomagnésien est favorable à la formation d'un composé organomagnésien de formule (II) dans laquelle m est égal à 1, alors qu'un ratio molaire supérieur à 0,5 sera davantage favorable à la formation d'un composé organomagnésien de formule (II) dans laquelle m est supérieur à 1.

Pour mettre en oeuvre la réaction du premier organomagnésien avec le deuxième organomagnésien, on ajoute typiquement une solution du deuxième organomagnésien sur une solution du premier organomagnésien. Les solutions du premier organomagnésien et du deuxième organomagnésien sont généralement des solutions dans un éther, tel que le diéthyléther, le dibutyléther, le tétrahydrofurane, le méthyltétrahydrofurane ou le mélange de deux ou plus de ces éthers. De préférence, les concentrations respectives des solutions du premier organomagnésien et du deuxième organomagnésien sont respectivement de 0,01 à 3 mol/L et de 0,02 à 5 mol/L. De manière plus préférentielle, les concentrations respectives du premier organomagnésien et du deuxième organomagnésien sont respectivement de 0,1 à 2 mol/L et de 0,2 à 4 mol/L.

Le premier organomagnésien et le deuxième organomagnésien peuvent être préparés au préalable par une réaction de Grignard à partir de magnésium métal et d'un précurseur adéquat. Pour le premier organomagnésien et le deuxième organomagnésien, les précurseurs respectifs sont de formule X-R^{A}-X et R^{B}-X, R^{A}, R^{B} et X étant tels que définis précédemment. La réaction de Grignard est mise en oeuvre typiquement par l'ajout du précurseur à du magnésium métal qui se présente généralement sous la forme de copeaux. De préférence, de l'iode (I₂) typiquement sous la forme de bille est introduit dans le réacteur avant l'ajout du précurseur afin d'activer la réaction de Grignard de manière connue.

Alternativement, le composé organomagnésien utile aux besoins de l'invention comme co-catalyseur peut être préparé par réaction d'un composé organométallique de formule M-R^{A}-M et de l'organomagnésien de formule R^{B}-Mg-X, M représentant un atome de lithium, de sodium ou de potassium, X, R^{B} et R^{A} étant tels que définis précédemment. De préférence, M représente un atome de lithium, auquel cas l'organométallique de formule M-R^{A}-M est un organolithien. La réaction de l'organolithien et de l'organomagnésien est conduite typiquement dans un éther tel que le diéthyléther, le dibutyléther, le tétrahydrofurane, le méthyltétrahydrofurane. La réaction est conduite aussi typiquement à une température allant de 0°C à 60°C. La mise en contact est réalisée de préférence à une température comprise entre 0°C et 23°C. La mise en contact du composé organométallique de formule M-R^{A}-M avec l'organomagnésien de formule R^{B}-Mg-X se fait préférentiellement par l'ajout d'une solution du composé organométallique M-R^{A}-M à une solution de l'organomagnésien R^{B}-Mg-X. La solution du composé organométallique M-R^{A}-M est généralement une solution dans un solvant hydrocarboné, de préférence n-hexane, cyclohexane ou méthylcyclohexane, la solution de l'organomagnésien R^{B}-Mg-X est généralement une solution dans un éther, de préférence le diéthyléther ou le dibutyléther. De préférence, les concentrations respectives des solutions du composé organométallique et de l'organomagnésien M-R^{A}-M et R^{B}-Mg-X sont respectivement de 0,01 à 1 mol/L et de 0,02 à 5 mol/L. De manière plus préférentielle, les concentrations respectives des solutions du composé organométallique et de l'organomagnésien M-R^{A}-M et R^{B}-Mg-X sont respectivement de 0,05 à 0,5 mol/L et de 0,2 à 3 mol/L.

Comme toute synthèse faite en présence de composés organométalliques, les synthèses décrites pour la synthèse des organomagnésiens utiles aux besoins de l'invention et pour la synthèse de l'organomagnésien conforme à l'invention, ont lieu dans des conditions anhydres sous atmosphère inerte, dans des réacteurs agités. Typiquement, les solvants et les solutions sont utilisés sous azote ou argon anhydre.

Une fois que l'organomagnésien utile aux besoins de l'invention est formé, il est récupéré généralement en solution après filtration conduite sous atmosphère inerte et anhydre. Il peut être stocké avant son utilisation dans sa solution dans des récipients hermétiques, par exemple des bouteilles capsulées, à une température comprise entre -25°C et 23°C.

Comme tout composé organomagnésien, le composé organomagnésien R^{B}-(Mg-R^{A})ₘ-Mg-R^{B} utile aux besoins de l'invention peut se présenter sous la forme d'une entité monomère (R^{B}-(Mg-R^{A})ₘ-Mg-R^{B})₁ ou sous la forme d'une entité polymère (R^{B}-(Mg-R^{A})ₘ-Mg-R^{B})ₚ,, p étant un nombre entier supérieur à 1, notamment dimère (R^{B}-(Mg-R^{A})ₘ-Mg-R^{B})₂, m étant comme défini précédemment. Par ailleurs, qu'il soit sous la forme d'une entité monomère ou polymère, il peut également se présenter sous la forme d'une entité coordinée à une ou plusieurs molécules d'un solvant, de préférence d'un éther tel que le diéthyléther, le tétrahydrofurane ou le méthyltétrahydrofurane.

Le système catalytique conforme à l'invention peut être préparé de façon traditionnelle par un procédé analogue à celui décrit dans la demande de brevet WO 2007054224 ou WO 2007054223. Par exemple on fait réagir dans un solvant hydrocarboné l'organomagnésien R^{B}-Mg-R^{A}-Mg-R^{B} utile aux besoins de l'invention et le métallocène typiquement à une température allant de 20 à 80°C pendant une durée comprise entre 5 et 60 minutes. Les quantités de co-catalyseur et de métallocène mises en réaction sont telles que le rapport entre le nombre de mole de Mg du co-catalyseur et le nombre de mole de métal de terre rare du métallocène va de préférence de 1 à 200, de manière plus préférentielle de 1 à moins de 20. La plage de valeurs allant de 1 à moins de 20 est notamment plus favorable pour l'obtention de polymères de masses molaires élevées. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du polymère conforme à l'invention.

Alternativement, le système catalytique conforme à l'invention peut être préparé par un procédé analogue à celui décrit dans la demande de brevet WO 2017093654 A1 ou dans la demande de brevet WO 2018020122 A1. Selon cette alternative, le système catalytique contient en outre un monomère de préformation choisi parmi un diène conjugué, l'éthylène ou un mélange d'éthylène et d'un diène conjugué, auquel cas le système catalytique est à base au moins du métallocène, de l'organomagnésien R^{B}-Mg-R^{A}-Mg-R^{B} utile aux besoins de l'invention et du monomère de préformation. Par exemple on fait réagir dans un solvant hydrocarboné l'organomagnésien et le métallocène typiquement à une température de 20 à 80°C pendant 10 à 20 minutes pour obtenir un premier produit de réaction, puis avec ce premier produit de réaction on fait réagir à une température allant de 40 à 90°C pendant 1h à 12h le monomère de préformation choisi parmi un diène conjugué, l'éthylène ou un mélange d'éthylène et d'un diène conjugué. Le diène conjugué à titre de monomère de préformation est de préférence un 1,3-diène tel que le 1,3-butadiène, l'isoprène ou encore un 1,3-diène de formule CH₂=CR-CH=CH₂, le symbole R représentant une chaîne hydrocarbonée ayant 3 à 20 atomes de carbone, en particulier le myrcène ou le β-farnésène. Le système catalytique ainsi obtenu peut être utilisé de suite dans le procédé conforme à l'invention ou être stocké sous atmosphère inerte, notamment à une température allant de -20°C à la température ambiante (23°C), avant son utilisation dans la synthèse de polymères.

Comme toute synthèse faite en présence de composé organométallique, la synthèse du métallocène, la synthèse de l'organomagnésien et la synthèse du système catalytique ont lieu dans des conditions anhydres sous atmosphère inerte. Typiquement, les réactions sont conduites à partir de solvants et de composés anhydres sous azote ou argon anhydre.

Le système catalytique peut se présenter sous la forme d'une solution lorsqu'il est en présence d'un solvant hydrocarboné. Le solvant hydrocarboné peut être aliphatique comme le méthylcyclohexane ou aromatique comme le toluène. Le solvant hydrocarboné est de préférence aliphatique, de manière plus préférentielle le méthylcyclohexane. Généralement, le système catalytique est stocké sous la forme d'une solution dans le solvant hydrocarboné avant d'être utilisé en polymérisation. On peut parler alors de solution catalytique qui comprend le système catalytique et le solvant hydrocarboné. Selon l'un quelconque des modes de réalisation de l'invention, le système catalytique comprend de préférence un solvant hydrocarboné. Lorsque le système catalytique est en solution, sa concentration est définie par la teneur en métal de métallocène dans la solution. La concentration en métal de métallocène a une valeur allant préférentiellement de 0,0001 à 0,2 mol/L, plus préférentiellement de 0,001 à 0,03 mol/L.

Le système catalytique selon l'invention est destiné à être utilisé dans des procédés de synthèse de polymères, notamment d'élastomères utilisables dans des compositions de caoutchouc, par exemple pour pneumatique.

Un premier procédé permet la préparation de polymères téléchéliques qui ont la particularité de présenter à chacune de ses extrémités une liaison carbone-magnésium. Le premier procédé comprend une étape de polymérisation en présence d'un système catalytique conforme à l'invention.

Un deuxième procédé permet la préparation de polymères téléchéliques qui ont la particularité de présenter à chacune de ses extrémités un groupe fonctionnel. Il comprend une étape de polymérisation suivie d'une étape de fonctionnalisation avec un agent de modification. L'étape de polymérisation est identique à celle du premier procédé. L'agent de modification est typiquement un composé connu pour réagir avec un composé ayant une liaison carbone-magnésium. À titre d'agent de modification conviennent en particulier les dihalogènes, les cétones. Les groupes fonctionnels aux extrémités du polymère sont avantageusement identiques. L'agent de modification est typiquement ajouté au milieu de polymérisation. Le polymère fonctionnalisé peut être récupéré selon les techniques classiques connues de l'homme du métier comme par exemple par précipitation, par évaporation du solvant sous pression réduite ou par stripping à la vapeur d'eau.

Un troisième procédé comprend une étape de polymérisation et une réaction de terminaison avec un composé protique. L'étape de polymérisation est identique à celle du premier procédé et du deuxième procédé. Le composé protique permet de stopper la polymérisation par réaction de terminaison sans apporter de fonctions aux extrémités du polymère. Le composé protique est par exemple un alcool comme le méthanol, l'éthanol, l'isopropanol ou l'eau. Il peut être ajouté au milieu de polymérisation. Alternativement, le milieu de polymérisation peut être versé dans le composé protique tel que le méthanol ou dans une solution contenant le composé protique, par exemple une solution de toluène contenant du méthanol.

Selon un mode de réalisation particulier du troisième procédé, le composé protique est un composé qui permet le marquage des extrémités du polymère avec un isotope de l'atome d'hydrogène comme le deutérium. Comme composé protique marqué conviennent l'eau deutérée et les alcools dont le groupe hydroxy est OD. Le polymère formé peut être récupéré selon les techniques classiques connues de l'homme du métier comme par exemple par précipitation, par évaporation du solvant sous pression réduite ou par stripping à la vapeur d'eau.

La réaction de polymérisation commune aux trois procédés conformes à l'invention est une réaction de polymérisation d'un monomère M choisi dans le groupe des monomères constitués par les 1,3-diènes, l'éthylène, les α-monooléfines et leurs mélanges. On entend par α-monooléfine une α-oléfine qui a une seule double liaison carbone-carbone, les doubles liaisons dans les composés aromatiques n'étant pas prises en compte. Par exemple, le styrène est considéré comme une α-monooléfine. De préférence, le monomère M est l'éthylène ou un mélange d'un 1,3-diène et d'éthylène ou encore un mélange d'un 1,3-diène, d'éthylène et d'une α-monooléfine comme le styrène, le 1,3-diène étant avantageusement le 1,3-butadiène, l'isoprène ou leurs mélanges.

La polymérisation est conduite de préférence en solution, en continu ou discontinu. Le solvant de polymérisation peut être un solvant hydrocarboné, aromatique ou aliphatique. A titre d'exemple de solvant de polymérisation, on peut citer le toluène et le méthylcyclohexane. Le monomère M peut être introduit dans le réacteur contenant le solvant de polymérisation et le système catalytique ou inversement le système catalytique peut être introduit dans le réacteur contenant le solvant de polymérisation et le monomère M. Le monomère M et le système catalytique peuvent être introduits simultanément dans le réacteur contenant le solvant de polymérisation, notamment dans le cas d'une polymérisation en continu. La polymérisation est conduite typiquement dans des conditions anhydres et en l'absence d'oxygène, en présence éventuelle d'un gaz inerte. La température de polymérisation varie généralement dans un domaine allant de 25 à 120°C, préférentiellement 30 à 100°C. Elle est ajustée selon le monomère à polymériser. De préférence, la copolymérisation est conduite à pression constante d'éthylène.

Au cours de la polymérisation de l'éthylène et des 1,3-diènes dans un réacteur de polymérisation, un ajout continu d'éthylène et des 1,3-diènes peut être réalisé dans le réacteur de polymérisation, auquel cas le réacteur de polymérisation est un réacteur alimenté. Ce mode de réalisation est tout particulièrement adapté pour la synthèse de copolymère statistique.

Ainsi, par des procédés simples qui comprennent une réaction de polymérisation et une réaction avec un agent de modification ou un composé protique marqué, peuvent être synthétisés des polymères dont les deux extrémités portent des groupes fonctionnels identiques ou sont marquées par un isotope.

Les polymères marqués aux extrémités de chaîne et les polymères fonctionnels aux extrémités de chaîne sont obtenus à partir des polymères téléchéliques qui présentent aux extrémités une liaison carbone-magnésium et qui sont susceptibles d'être obtenus par le premier procédé. Les polymères téléchéliques qui présentent aux extrémités une liaison carbone-magnésium ont donc la capacité de donner lieu d'une part à la formation de polymères dont les deux extrémités sont marquées par un isotope de l'atome d'hydrogène, d'autre part à la formation de polymères dont les deux extrémités portent des groupes fonctionnels identiques.

Les polymères téléchéliques ayant une liaison carbone-magnésium aux extrémités peuvent être représentés par la formule (V) dans laquelle R^{A} et R^{B} sont définis comme précédemment, y compris selon les modes de réalisation préférentiels décrits, la dénomination « poly » désigne une chaîne polymère d'un 1,3-diène, d'éthylène, d'une α-monooléfine ou de leurs mélanges.

R^{B}-Mg-poly-R^{A}-poly-Mg-R^{B} (V)

De préférence, la chaîne polymère désignée par la dénomination « poly » est une chaîne polymère d'éthylène ou une chaîne polymère d'un 1,3-diène et d'éthylène ou encore une chaîne polymère d'un 1,3-diène, d'éthylène et d'une α-monooléfine comme le styrène. Le 1,3-diène est un 1,3-diène ou un mélange de 1,3-diènes. A titre de 1,3-diènes conviennent tout particulièrement les 1,3-diènes ayant 4 à 24 atomes de carbone tel que le 1,3-butadiène, l'isoprène et leurs mélanges. Selon un mode de réalisation particulier, la chaîne polymère désignée par la dénomination « poly » contient des unités éthylène, des unités 1,3-butadiène et des unités cycliques, unités 1,2-cyclohexane. Selon le mode de réalisation particulier dans lequel la chaîne polymère désignée par la dénomination « poly » contient des unités 1,2-cyclohexane, elle en contient préférentiellement au plus 15% en mole.

Selon l'un quelconque des modes de réalisation de l'invention, la chaîne polymère désignée par la dénomination « poly » contient préférentiellement plus de 50% en mole d'unité éthylène.

Selon un mode de réalisation particulièrement préférentiel de l'invention, la chaîne polymère désignée par la dénomination « poly » est une chaîne polymère statistique d'un 1,3-diène et d'éthylène ou une chaîne polymère statistique d'un 1,3-diène, d'éthylène et d'une α-monooléfine comme le styrène.

En résumé, l'invention est mise en oeuvre avantageusement selon l'un quelconque des modes de réalisation suivants 1 à 42 :
Mode 1 : Système catalytique à base au moins :
   d'un métallocène de formule (la) ou (Ib), de préférence (la),
   d'un organomagnésien à titre de co-catalyseur,

      {P(Cp¹)(Cp²)Y} (la)

      Cp³Cp⁴Y (Ib)

      Y désignant un groupe comportant un atome d'une terre rare,
      Cp¹, Cp², Cp³ et Cp⁴, identiques ou différents, étant choisis dans le groupe constitué par les groupes fluorényles, les groupes cyclopentadiényles et les groupes indényles, les groupes étant substitués ou non substitués,
      P étant un groupe pontant les deux groupes Cp¹ et Cp², et comprenant un atome de silicium ou de carbone, l'organomagnésien étant un composé de formule (II)

         R^{B}-(Mg-R^{A})ₘ-Mg-R^{B} (II)

         R^{B} étant différent de R^{A},
         R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle,
         R^{A} étant une chaîne divalente hydrocarbonée aliphatique, interrompue ou non par un ou plusieurs atomes d'oxygène ou de soufre ou bien par un ou plusieurs groupes arylènes,
         m étant un nombre supérieur ou égal à 1, de préférence égal à 1.
Mode 2 : Système catalytique selon le mode 1 dans lequel le métallocène est de formule (la).
Mode 3 : Système catalytique selon l'un quelconque des modes 1 à 2 dans lequel Cp¹ et Cp² sont identiques et sont choisis dans le groupe constitué par les groupes fluorényles substitués et le groupe fluorényle non substitué de formule C₁₃H₈.
Mode 4 : Système catalytique selon l'un quelconque des modes 1 à 3 dans lequel Cp¹ et Cp² représentent chacun un groupe fluorényle non substitué de formule C₁₃H₈.
Mode 5 : Système catalytique selon l'un quelconque des modes 1 à 4, dans lequel le symbole Y représente le groupe Met-G, avec Met désignant l'atome de la terre rare et G désignant un groupe comprenant le motif borohydrure BH₄ ou désignant un atome d'halogène choisi dans le groupe constitué par le chlore, le fluor, le brome et l'iode.
Mode 6 : Système catalytique selon le mode 5 dans lequel G désigne un atome de chlore ou le groupe de formule (III)

   (BH₄)_{(1+y)-}L_{y}-Nₓ (III)

   dans laquelle
   L représente un métal alcalin choisi dans le groupe constitué par le lithium, le sodium et le potassium,
   N représente une molécule d'un éther, de préférence diéthyléther ou tétrahydrofurane,
   x, nombre entier ou non, est égal ou supérieur à 0,
   y, nombre entier, est égal ou supérieur à 0.
Mode 7 : Système catalytique selon le mode 6 dans lequel G désigne le groupe de formule (III).
Mode 8 : Système catalytique selon l'un quelconque des modes 1 à 7 dans lequel la terre rare est un lanthanide dont le numéro atomique varie de 57 à 71.
Mode 9 : Système catalytique selon l'un quelconque des modes 1 à 8 dans lequel la terre rare est le néodyme.
Mode 10 : Système catalytique selon l'un quelconque des modes 1 à 9 dans lequel le pont P répond à la formule ZR¹R², Z représentant un atome de silicium ou de carbone, R¹ et R², identiques ou différents, représentant chacun un groupe alkyle comprenant de 1 à 20 atomes de carbone.
Mode 11 : Système catalytique selon le mode 10 dans lequel R¹ et R² représentent chacun un méthyle.
Mode 12 : Système catalytique selon l'un quelconque des modes 10 à 11 dans lequel Z représente un atome de silicium.
Mode 13 : Système catalytique selon l'un quelconque des modes 1 à 12 dans lequel le métallocène est de formule (III-1), (III-2), (III-3), (III-4) ou (III-5) :

   [Me₂Si(Flu)₂Nd(µ-BH₄)₂Li(THF)] (III-1)

   [{Me₂SiFlu₂Nd(µ-BH₄)₂Li(THF)}₂] (III-2)

   [Me₂SiFlu₂Nd(µ-BH₄)(THF)] (III-3)

   [{Me₂SiFlu₂Nd(µ-BH₄)(THF)}₂] (III-4)

   [Me₂SiFlu₂Nd(µ-BH₄)] (III-5)

   Flu représentant le groupe C₁₃H₈.
Mode 14 : Système catalytique selon l'un quelconque des modes 1 à 13 dans lequel si l'un des 2 atomes de carbone du noyau benzénique de R^{B} en ortho du magnésium est substitué par un isopropyle, le deuxième atome de carbone du noyau benzénique de R^{B} en ortho du magnésium n'est pas substitué par un isopropyle.
Mode 15 : Système catalytique selon l'un quelconque des modes 1 à 14 dans lequel les atomes de carbone du noyau benzénique de R^{B} en ortho du magnésium sont substitués par un méthyle ou un éthyle.
Mode 16 : Système catalytique selon l'un quelconque des modes 1 à 15 dans lequel les atomes de carbone du noyau benzénique de R^{B} en ortho du magnésium sont substitués par un méthyle.
Mode 17 : Système catalytique selon l'un quelconque des modes 1 à 16 dans lequel l'organomagnésien est de formule (IV-m) 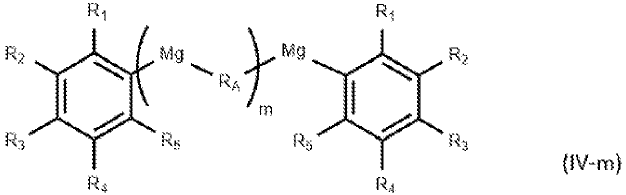
   R₁ et R₅, identiques ou différents, représentant un méthyle ou un éthyle, de préférence un méthyle, R₂, R₃ et R₄, identiques ou différents, étant un atome d'hydrogène ou un alkyle,
   R^{A} étant une chaîne divalente hydrocarbonée aliphatique, interrompue ou non par un ou plusieurs atomes d'oxygène ou de soufre ou bien par un ou plusieurs groupes arylènes,
   m étant un nombre supérieur ou égal à 1, de préférence égal à 1.
Mode 18 : Système catalytique selon l'un quelconque des modes 1 à 17 dans lequel m est égal à 1.
Mode 19 : Système catalytique selon l'un quelconque des modes 1 à 18 dans lequel R^{A} est un alcanediyle, ramifiée ou linéaire, un cycloalcanediyle ou un radical xylènediyle.
Mode 20 : Système catalytique selon l'un quelconque des modes 1 à 19 dans lequel R^{A} contient 3 à 10 atomes de carbone.
Mode 21 : Système catalytique selon l'un quelconque des modes 1 à 20 dans lequel R^{A} contient 3 à 8 atomes de carbone.
Mode 22 : Système catalytique selon l'un quelconque des modes 1 à 21 dans lequel R^{A} est un alcanediyle linéaire.
Mode 23 : Système catalytique selon l'un quelconque des modes 1 à 22 dans lequel le rapport entre le nombre de mole de Mg du co-catalyseur et le nombre de mole de métal de terre rare du métallocène va de 1 à 200.
Mode 24 : Système catalytique selon l'un quelconque des modes 1 à 23 dans lequel le rapport entre le nombre de mole de Mg du co-catalyseur et le nombre de mole de métal de terre rare du métallocène va de 1 à moins de 20.
Mode 25 : Procédé de préparation d'un premier polymère téléchélique qui comprend une étape de polymérisation d'un monomère M en présence d'un système catalytique défini à l'un quelconque des modes 1 à 24, le monomère M étant choisi dans le groupe des monomères constitués par les 1,3-diènes, l'éthylène, les α-monooléfines et leurs mélanges.
Mode 26 : Procédé de préparation d'un deuxième polymère téléchélique, qui comprend une étape de polymérisation d'un monomère M en présence d'un système catalytique défini à l'un quelconque des modes 1 à 24, laquelle étape de polymérisation est suivie d'une étape de fonctionnalisation avec un agent de modification, le monomère M étant choisi dans le groupe des monomères constitués par les 1,3-diènes, l'éthylène, les α-monooléfines et leurs mélanges.
Mode 27 : Procédé de préparation d'un polymère qui comprend une étape de polymérisation d'un monomère M en présence d'un système catalytique défini à l'un quelconque des modes 1 à 24 et une réaction de terminaison avec un composé protique, le monomère M étant choisi dans le groupe des monomères constitués par les 1,3-diènes, l'éthylène, les α-monooléfines et leurs mélanges.
Mode 28 : Procédé de préparation selon l'un quelconque des modes 25 à 27 dans lequel le monomère M est l'éthylène ou un mélange d'un 1,3-diène et d'éthylène ou encore un mélange d'un 1,3-diène, d'éthylène et d'une α-monooléfine.
Mode 29 : Procédé de préparation selon le mode 28 dans lequel le 1,3-diène est le 1,3-butadiène, l'isoprène ou leurs mélanges.
Mode 30 : Polymère téléchélique de formule (V)

   R^{B}-Mg-poly-R^{A}-poly-Mg-R^{B} (V)

   dans laquelle R^{B} est différent de R^{A}, R^{A} est une chaîne divalente hydrocarbonée aliphatique, interrompue ou non par un ou plusieurs atomes d'oxygène ou de soufre ou bien par un ou plusieurs groupes arylènes, R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle, la dénomination « poly » désigne une chaîne polymère d'un 1,3-diène, d'éthylène, d'une α-monooléfines ou de leurs mélanges, de préférence une chaîne polymère d'éthylène ou une chaîne polymère d'un 1,3-diène et d'éthylène ou encore une chaîne polymère d'un 1,3-diène, d'éthylène et d'une α-monooléfine.
Mode 31 : Polymère téléchélique selon le mode 30 dans lequel la chaîne polymère désignée par la dénomination « poly » est une chaîne polymère d'éthylène ou une chaîne polymère d'un 1,3-diène et d'éthylène ou encore une chaîne polymère d'un 1,3-diène, d'éthylène et d'une α-monooléfine.
Mode 32 : Polymère téléchélique selon l'un quelconque des modes 30 à 31 dans lequel la chaîne polymère désignée par la dénomination « poly » désigne une chaîne polymère qui contient des unités éthylène, des unités 1,3-butadiène et des unités cycliques, unités 1,2-cyclohexane de formule suivante. 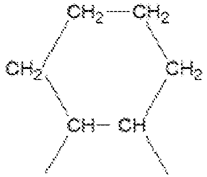
Mode 33 : Polymère téléchélique selon l'un quelconque des modes 30 à 32 dans lequel la chaîne polymère désignée par la dénomination « poly » désigne une chaîne polymère qui contient plus de 50% en mole d'unité éthylène.
Mode 34 : Polymère téléchélique selon l'un quelconque des modes 30 à 33 dans lequel la chaîne polymère désignée par la dénomination « poly » désigne une chaîne polymère statistique d'un 1,3-diène, d'éthylène et d'une α-monooléfine.
Mode 35 : Polymère téléchélique selon l'un quelconque des modes 30 à 34 dans lequel R^{A} est un alcanediyle, ramifiée ou linéaire, un cycloalcanediyle ou un radical xylènediyle.
Mode 36 : Polymère téléchélique selon l'un quelconque des modes 30 à 35 dans lequel R^{A} contient 3 à 10 atomes de carbone.
Mode 37 : Polymère téléchélique selon l'un quelconque des modes 30 à 36 dans lequel R^{A} contient 3 à 8 atomes de carbone.
Mode 38 : Polymère téléchélique selon l'un quelconque des modes 30 à 37 dans lequel R^{A} est un alcanediyle linéaire.
Mode 39 : Polymère téléchélique selon l'un quelconque des modes 30 à 38 dans lequel si l'un des 2 atomes de carbone du noyau benzénique de R^{B} en ortho du magnésium est substitué par un isopropyle, le deuxième atome de carbone du noyau benzénique de R^{B} en ortho du magnésium n'est pas substitué par un isopropyle.
Mode 40 : Polymère téléchélique selon l'un quelconque des modes 30 à 39 dans lequel les atomes de carbone du noyau benzénique de R^{B} en ortho du magnésium sont substitués par un méthyle ou un éthyle.
Mode 41 : Polymère téléchélique selon l'un quelconque des modes 30 à 40 dans lequel les atomes de carbone du noyau benzénique de R^{B} en ortho du magnésium sont substitués par un méthyle.
Mode 42 : Polymère téléchélique selon l'un quelconque des modes 30 à 41, dans lequel R^{B} est de formule suivante 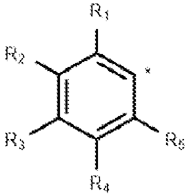
   R₁ et R₅, identiques ou différents, représentent un méthyle ou un éthyle, de préférence un méthyle, R₂, R₃ et R₄, identiques ou différents, étant un atome d'hydrogène ou un alkyle,
   le symbole * représentant un rattachement direct à l'atome de magnésium.

Les caractéristiques précitées de la présente invention, ainsi que d'autres, seront mieux comprises à la lecture de la description suivante des exemples de réalisation de l'invention, donnés à titre illustratif et non limitatif.

### Exemples

### Exemple 1 : préparation d'un co-catalyseur utile aux besoins de l'invention, le 1,5-di(mésitylmagnésium)-pentanediyle (DMMP).

Le toluène et le 2-méthyltétrahydrofurane (MeTHF) utilisés lors des synthèses ont été distillés sur sodium/benzophénone. Les inertages sont réalisés par 3 cycles vide/argon.

Synthèse du bromure de 2-mésitylmagnésium : 4,15 g (170 mmol, 3,4 équivalents) de magnésium sont inertés dans un ballon de 250 mL muni d'une olive aimantée et surmonté d'une ampoule de coulée de 10 mL. Une bille de diiode (10 mg) est introduite sur le magnésium. 47,5 mL de MeTHF sont introduits dans le ballon sous agitation et 2,5 mL sont introduits dans l'ampoule de coulée. 7,65 mL de 2-bromomésitylène (50 mmol, 1 équivalent) dégazés et séchés sur tamis moléculaire activé sont introduits dans l'ampoule de coulée. Le ballon est chauffé à 60 °C et le 2-bromomésitylène est coulé au goutte à goutte sur le magnésium pendant 1 h. L'agitation est maintenue 3 h à 60 °C puis 12 h à 20 °C.

Aliquote de l'huile concentrée en tube de Young : ¹H NMR (C₆D₆ - 400 MHz - 298 K) δ : ppm = 7,01 (s, « a »), 2,74 (s, « b »), 2,36 (s, « c ») 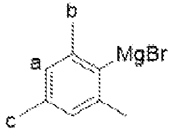 Synthèse du 1,5-di(bromure de magnésium)-pentanediyle : 6,17 g (250 mmol, 10 équivalents) de magnésium sont inertés dans un ballon de 250 mL muni d'une olive aimantée et surmonté d'une ampoule de coulée de 50 mL. Une bille de diiode (10 mg) est introduite sur le magnésium. 10 mL de MeTHF sont introduits dans le ballon sous agitation et 40 mL sont introduits dans l'ampoule de coulée. 3,41 mL de 1,5-dibromopentane (25 mmol, 1 équivalent) dégazés et séchés sur tamis moléculaire activé sont introduits dans l'ampoule de coulée. La solution d'halogénoalcane est coulée au goutte à goutte sur le magnésium pendant 1 h. L'agitation est maintenue 12 h à 20 °C.

Aliquote de l'huile concentrée en tube de Young : ¹H NMR (C₆D₆ - 400 MHz - 298 K) δ : ppm = 2,06 (quin, J = 7,6 Hz, « b »), 1,80 (quin, J = 7,4 Hz, « c »), -0,05 (t, J = 7,7 Hz, « a ») ; quin pour quintuplet.

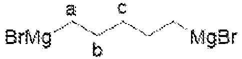

Synthèse du 1,5-di(mésitylmagnésium)-pentanediyle : La solution précédente de bromure de 2-mésitylmagnésium est canulée, c'est-à-dire transférée par l'intermédiaire d'une canule, sur la solution de 1,5-di(bromure de magnésium)-pentanediyle. 20 mL de MeTHF ainsi que 10,3 mL de 1,4-dioxane (120 mmol, 1,2 équivalent/Mg) sont introduits dans l'ampoule de coulée. Cette solution est coulée dans le ballon au goutte à goutte pendant 1 h sous vive agitation. L'agitation est maintenue 20 h à 20 °C. L'agitation est arrêtée et le ballon est mis de côté pendant 24 h afin de laisser décanter totalement les sels de MgBr₂. Le surnageant est transféré à la canule filtrante dans un tube de Schlenk inerté, lequel est équipé d'un fritté sur lequel a été placé 1 cm de célite calcinée, afin d'y être filtré. Une fois les sels éliminés, la solution jaune obtenue est concentrée sous vide jusqu'à obtention d'une huile de masse 17,88 g (23 mmol en groupement pentanediyle d'après les estimations faites par RMN ¹H). 15,75 mL de toluène sont ajoutés sur 9,1 g (11,7 mmol) de l'huile sous agitation afin d'obtenir une solution diluée de concentration 0,45 mol L⁻¹ en groupement pentanediyle. La densité de l'huile concentrée a été estimée à 1 g mL⁻¹.

Aliquote de l'huile concentrée : ¹H NMR (C₆D₆ - 500 MHz - 340 K) δ : ppm = 6,90 (s, « d »), 2,54 (s, « e »), 2,29 (s, « f »), 2,20 (quin, J = 6,5 Hz, « b »), 1,82 (quin, J = 6,0 Hz, « c »), 0,10 (t, J = 7,2 Hz, « a ») ¹³C NMR (C₆D₆ - 500 MHz - 340 K) δ : ppm = 161,00 (« g »), 148,30 (« h »), 135,18 (« i »), 125,74 (« d »), 28,53 (« b »), 28,53 (« c »), 28,11 (« e »), 21,46 (« f »), 10,22 (« a »)

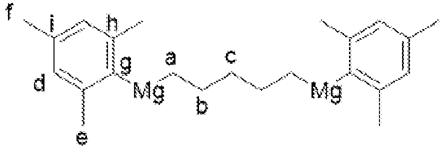

La spectroscopie RMN haute résolution des composés organométalliques et de leurs précurseurs a été effectuée sur un spectromètre Bruker 400 Avance III opérant à 400 MHz équipé d'une sonde BBFO 5 mm ou sur un spectromètre Bruker 500 Avance III opérant à 500 MHz équipé d'une sonde BBFO 5 mm. Les acquisitions sont faites à 298 K ou 340 K dans du benzène deutéré (C₆D₆). Les échantillons ont été analysés à une concentration de 5 % en masse. Les déplacements chimiques sont donnés en ppm, relativement au signal proton du C₆D₅H fixé à 7,16 ppm et au signal du carbone du C₆D₆ fixé à 128,06 ppm. La structure des diorganomagnésiens est caractérisée par résonance magnétique nucléaire RMN 1D ¹H, ¹H-¹³C HSQC ((Heteronuclear Single Quantum Cohérence), ¹H-¹³C HMBC (Heteronuclear Multiple-Bond Correlation) et NOESY. Le diorganomagnésien est analysé avec son solvant de synthèse et le benzène deutéré (C₆D₆) est ajouté à la solution pour réaliser le « lock » de la RMN.

### Exemple 2 : préparation d'un co-catalyseur de référence, le 1,5-di(bromure de magnésium)-pentanediyle (DBMP).

9,72 g de magnésium (400 mmol, 10 équivalents), 80 mL de MeTHF (dont 64 mL dans l'ampoule de coulée), 60 mg de diiode (0,23 mmol, 0,006 équivalent) et 5,45 mL de 1,5-dibromopentane (40 mmol, 1 équivalent) ont été utilisés lors de la synthèse. La verrerie utilisée consiste en un ballon de 200 mL et une ampoule de coulée de 100 mL. Une fois la synthèse du réactif de Grignard terminée, la solution est canulée à la canule filtrante dans un second ballon de 200 mL inerté. Cette solution est concentrée sous vide puis diluée dans 55 mL de toluène. La concentration en groupement pentanediyle est estimée à 0,43 mol L⁻¹. Cette huile est non miscible dans le méthylcyclohexane. Aliquote de l'huile concentrée : ¹H NMR (Toluene-D₈ - 500 MHz - 298 K) δ : ppm = 2,21 (quin, J = 7,2 Hz, « b »), 1,88 (quin, J = 7,0 Hz, « c »), 0,11 (t, J = 7,4 Hz, « a »)

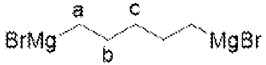

### Synthèse de polymères téléchéliques et fonctionnels :

Des homopolymères d'éthylène et des copolymères d'éthylène et de butadiène ont été préparés à partir du complexe {(Me₂Si(C₁₃H₈)₂)Nd(-BH₄)[(-BH₄)Li(THF)]}₂ et du co-catalyseur di(mésitylmagnésium) pentanediyle (DMMP) préparé selon le mode opératoire décrit précédemment. Des polymères ont été également synthétisés en utilisant un système catalytique non conforme à l'invention qui comprend comme co-catalyseur le 1,5-di(bromure de magnésium)-pentanediyle (DBMP) de l'exemple 2. Les polymères ont été caractérisés avec les méthodes décrites ci-après.

Chromatographie d'exclusion stérique haute température (SEC-HT). Les analyses de Chromatographie d'exclusion stérique à haute température (SEC-HT) ont été réalisées avec un appareil Viscotek (Malvern Instruments) équipé de 3 colonnes (PLgel Olexis 300 mm x 7 mm I. D. de Agilent Technologies) et de 3 détecteurs (réfractomètre et viscosimètre différentiels, et diffusion de la lumière). 200 µL d'une solution de l'échantillon à une concentration de 3 mg mL⁻¹ ont été élués dans le 1,2,4-trichlorobenzène en utilisant un débit de 1 mL min⁻¹ à 150 °C. La phase mobile a été stabilisée par du 2,6-di(tert-butyl)-4-méthylphénol (400 mg L⁻¹). Le logiciel OmniSEC a été utilisé pour l'acquisition et l'analyse des données. Les masses molaires moyennes en nombre (Mn) et en masse (Mw) des polyéthylènes synthétisés sont calculées en utilisant une courbe de calibration obtenue à partir de polyéthylènes standards (*M*ₚ : 338, 507, 770, 1890, 17 000, 27 300, 43 400, 53 100, 65 700, 78 400 g.mol⁻¹) de Polymer Standard Service (Mainz). Les masses molaires moyennes en nombre (Mn) et en masse (Mw) des copolymères d'éthylène et de butadiène synthétisés sont calculées en utilisant une courbe de calibration universelle étalonnée à partir de polystyrènes standards (Masses molaires au pic *M*ₚ : 672 à 12 000 000 g mol⁻¹) de Polymer Standard Service (Mainz) en utilisant les détecteurs réfractométrique et viscosimétrique.

Chromatographie d'exclusion stérique THF (SEC-THF). Les analyses de chromatographie d'exclusion stérique ont été réalisées avec un appareil Viscotek (Malvern Instruments). Cet appareil est équipé de 3 colonnes (SDVB, 5 µm, 300 x 7.5 mm de Polymer Standard Service), d'une colonne de garde et de 3 détecteurs (réfractomètre et viscosimètre différentiels, et diffusion de la lumière). 3 mL d'une solution de l'échantillon de concentration 3 mg mL⁻¹ dans le THF ont été filtrés sur une membrane PTFE de 0,45 µm. 100 µL de cette solution sont élués dans le THF en utilisant un débit de 1 mL min⁻¹ à une température de 35 °C. Le logiciel OmniSEC a été utilisé pour l'acquisition et l'analyse des données. Les masses molaires des copolymères d'éthylène et de butadiène synthétisés sont calculées en utilisant une courbe de calibration universelle obtenue à partir de polystyrènes standards (*M*ₚ : 1 306 à 2 520 000 g mol⁻¹) de Polymer Standard Service (Mainz).

Résonance magnétique nucléaire (RMN). La spectroscopie RMN haute résolution des polymères a été effectuée sur un spectromètre Bruker 400 Avance III opérant à 400 MHz équipé d'une sonde BBFO 5 mm pour le proton et sur un spectromètre Bruker 400 Avance Il opérant à 400 MHz équipé d'une sonde PSEX ¹³C 10 mm pour le carbone. Les acquisitions sont faites à 363 K. Un mélange de tétrachloroéthylène (TCE) et benzène deutéré (C₆D₆) (2/1 v/v) a été utilisé comme solvant. Les échantillons ont été analysés à une concentration de 1 % en masse pour le proton et 5 % en masse pour le carbone. Les déplacements chimiques sont donnés en ppm, relativement au signal proton du benzène deutéré fixé à 7,16 ppm et au signal du carbone du TCE fixé à 120,65 ppm. La séquence utilisée pour l'acquisition d'un spectre ¹³C d'un polymère est : « Power gate decoupling » (spectre découplé proton avec NOE) avec un angle d'impulsion de 70 °, TD = 64 K et un délai entre les impulsions de 4,5 s. Le nombre d'acquisitions est fixé à 5120.

### Synthèse de polyéthylènes téléchéliques et fonctionnels :

### Exemple PE1 :

200 mL de toluène distillé sur sodium/benzophénone sont introduits dans un ballon de 250 mL inerté et équipé d'une olive aimantée.

2,0 mL (0,90 mmol) de 1,5-di(mésitylmagnésium)-pentanediyle préparé selon l'exemple 1 (0,45 mol L⁻¹ dans le toluène) sont introduits dans le ballon sous agitation. 8,0 mg (12,5 µmol en néodyme) de {(Me₂Si(C₁₃H₈)₂)Nd(-BH₄)[(-BH₄)Li(THF)]}₂ sont ensuite introduits dans le ballon.

La solution catalytique est canulée dans un réacteur de 250 mL sous atmosphère inerte. La surpression d'argon dans le réacteur est réduite à 0,5 bar puis le réacteur est pressurisé à 4 bars d'éthylène et la température est amenée simultanément à 70 °C. La pression est maintenue constante dans le réacteur à l'aide d'un réservoir contenant de l'éthylène.

Quand la quantité d'éthylène désirée a été consommée, ici après 19 min, le réacteur est dégazé et la température est ramenée à 20 °C. 20 % de la solution de polymère sont canulés hors du réacteur, puis le polymère contenu dans ces 20% est précipité dans du méthanol sous agitation. 5,86 g (23 mmol, 16 équivalents/Mg) de diiode dissous dans 30 mL de toluène sont ajoutés à la solution polymère restant dans le réacteur. Après 3 h d'agitation, la solution polymère est versée sur du méthanol sous agitation pour précipiter le polymère.

Le polymère récupéré après la réaction avec l'agent de modification (PE1F) est filtré, lavé au méthanol, puis séché et caractérisé. Il est désigné par PE1F.

Le polymère précipité dans le méthanol avant l'ajout de l'agent de modification est également récupéré par filtration, puis séché avant d'être caractérisé comme polymère non fonctionnel (PE1NF).

1,13 g de polymère PE1F de formule I-( CH₂-CH₂)ₙ-(CH₂)₅-(CH₂-CH₂)ₙ-I et 0,25 g de polymère PE1NF de formule H-(CH₂-CH₂)ₙ-(CH₂)₅-(CH₂-CH₂)ₙ-H sont récupérés.

Le spectre de RMN proton du polymère PE1F (TCE/C₆D₆ 2/1 v/v, 400 MHz, 363 K) permet d'observer le méthylène en position α de l'iode à δ = 2,95 ppm (triplet, (CH₂CH₂)ₙ-C**H**₂I).Le taux de fonction dans le polymère PE1F est calculé en déterminant le taux de chaînes non fonctionnalisées du polymère. Le taux de chaînes non fonctionnalisées dans PE1F est déterminé en normalisant les intégrales des signaux (CH₂CH₂)ₙ des deux spectres RMN ¹H à 100, puis en divisant l'intégrale des signaux CH₃ du polymère PE1F par celle des signaux CH₃ du polymère PE1NF. Ainsi dans PE1F, 13 % des extrémités de chaîne de polymère sont non fonctionnelles, et donc 87 % des extrémités de chaîne de polymère ont été fonctionnalisées avec un atome d'iode.

### Exemple PE2

La synthèse du polymère téléchélique est similaire à celle réalisée dans l'exemple précédent PE1 à la différence près que 4,0 mL (1,80 mmol) de 1,5-di(mésitylmagnésium)-pentanediyle préparé selon l'exemple 1 (0,45 mol L⁻¹ dans le toluène) et 10,0 mg (15,6 µmol de néodyme) de {(Me₂Si(C₁₃H₈)₂)Nd(-BH₄)[(-BH₄)Li(THF)]}₂ sont utilisés pour préparer la solution catalytique.

Quand la quantité d'éthylène désirée a été consommée, ici après 46 min, le réacteur est dégazé et la température est ramenée à 20 °C. 50 % de la solution polymère est canulée hors du réacteur, puis le polymère (PE2NF) contenu dans ces 50% est précipité dans du méthanol sous agitation.

2,0 mL (44 mmol, 11 équivalents/Mg) de méthanol deutéré dilués dans 5 mL de toluène sont ajoutés à la solution polymère restant dans le réacteur. Après 1 h d'agitation, la solution polymère est versée sur du méthanol sous agitation pour précipiter le polymère PE2M.

Chaque polymère précipité est filtré, lavé au méthanol puis séché. 1,03 g de polymère PE2M : D-(CH₂-CH₂)ₙ-(CH₂)₅-(CH₂-CH₂)ₙ-D et 1,00 g de polymère PE2NF : H-(CH₂-CH₂)ₙ-(CH₂)₅-(CH₂-CH₂)ₙ-H sont récupérés.

Le spectre de RMN proton du polymère PE2M (TCE/C₆D₆ 2/1 v/v, 400 MHz, 363 K) permet d'observer le méthylène en position α du deutérium à δ = 0,83 (large, -C**H**₂D)).

Le taux de marquage dans le polymère PE2M est calculé en déterminant le taux de chaînes non marquées du polymère. Le taux de chaînes non marquées dans PE2M est déterminé en normalisant les intégrales des signaux (CH₂CH₂)ₙ des deux spectres RMN ¹³C à 100 puis en divisant l'intégrale des signaux CH₃ du polymère PE2M par celle des signaux CH₃ du polymère PE2NF. Ainsi dans PE2M, 9 % des extrémités de chaîne de polymère sont non marquées, et donc 91 % des extrémités de chaîne de polymère ont été marquées avec un atome de deutérium.

### Exemple PE3 :

La synthèse du polymère téléchélique est similaire à celle réalisée dans l'exemple précédent PE2 à la différence près que 3,0 mL (1,35 mmol) de 1,5-di(bromure de magnésium)-pentanediyle préparé selon l'exemple 2 (0,45 mol L⁻¹ dans le toluène) et 10,0 mg (15,6 µmol de néodyme) de {(Me₂Si(C₁₃H₈)₂)Nd(-BH₄)[(-BH₄)Li(THF)]}₂ sont utilisés pour préparer la solution catalytique. Le système catalytique est un système catalytique non conforme à l'invention.

Quand la quantité d'éthylène désirée a été consommée, ici après 49 min, le réacteur est dégazé et la température est ramenée à 20 °C. 40 % de la solution polymère est canulée hors du réacteur, puis le polymère contenu dans ces 40% est précipité dans du méthanol sous agitation.

2,0 mL (44 mmol, 15 équivalents/Mg) de méthanol deutéré dilués dans 5 mL de toluène sont ajoutés à la solution polymère restant dans le réacteur. Après 1 h d'agitation, la solution polymère est versée sur du méthanol sous agitation pour précipiter le polymère.

Chaque polymère est filtré, lavé au méthanol puis séché. 1,14 g de polymère PE3M : D-(CH₂-CH₂)ₙ-(CH₂)₅-(CH₂-CH₂)ₙ-D et 0,70 g de polymère PE3NF : H-(CH₂-CH₂)ₙ-(CH₂)₅-(CH₂-CH₂)ₙ-H sont récupérés. Le spectre de RMN proton du polymère PE3M (TCE/C₆D₆ 2/1 v/v, 400 MHz, 363 K) permet d'observer le méthylène en position α du deutérium à δ = 0,83 (large, -C**H**₂D)).

Le taux de marquage dans le polymère PE3M est calculé en déterminant le taux de chaînes non marquées du polymère. Le taux de chaînes non marquées dans PE3M est déterminé en normalisant les intégrales des signaux (CH₂CH₂)ₙ des deux spectres RMN ¹³C à 100 puis en divisant l'intégrale des signaux CH₃ du polymère PE3M par celle des signaux CH₃ du polymère PE3NF. Ainsi dans PE3M, 11 % des extrémités de chaîne de polymère sont non marquées, et donc 89 % des extrémités de chaîne de polymère ont été marquées avec un atome de deutérium.

Les conditions de polymérisation de l'éthylène sont reportées dans le tableau 1. Dans le tableau 1 figure aussi pour chaque exemple l'activité catalytique calculée sur toute la durée de la polymérisation et exprimée en Kg mol⁻¹ h⁻¹. Les caractéristiques des polymères polyéthylène synthétisés figurent dans le tableau 2. La méthode SEC-HT a été utilisée.

Synthèse de copolymères d'éthylène et de 1,3-butadiène téléchéliques et fonctionnels :

### Exemple EBR1 :

200 mL de toluène purifié sur colonne d'alumine activée (également dénommée fontaine à solvant) sont introduits dans un ballon de 250 mL inerté et équipé d'une olive aimantée. 2,2 mL (1,0 mmol) de 1,5-di(mésitylmagnésium)pentanediyle préparé selon l'exemple 1 (0,45 mol L⁻¹ dans le toluène) sont introduits dans le ballon sous agitation. 32,0 mg (50 µmol en néodyme) de {(Me₂Si(C₁₃H₈)₂)Nd(-BH₄)[(-BH₄)Li(THF)]}₂ sont ensuite introduits dans le ballon.

La solution catalytique est canulée dans un réacteur de 250 mL sous atmosphère inerte. La surpression d'argon dans le réacteur est réduite à 0,5 bar, puis le réacteur est pressurisé à 4 bars avec un mélange éthylène/butadiène 80/20 molaire et la température est amenée simultanément à 70 °C. La pression est maintenue constante dans le réacteur à l'aide d'un réservoir contenant un mélange gazeux d'éthylène/butadiène à 80/20 molaire.

Le réacteur est dégazé lorsque 10 g de monomères visés sont consommés, ici après 145 min, la température est ramenée à 20 °C.

Pour déterminer la microstructure et la macrostructure du polymère téléchélique, la solution polymère est versée sur du méthanol sous agitation pour précipiter le polymère. Le polymère est lavé au méthanol puis séché. 10,50 g de polymère sont récupérés.

### Exemple EBR2 :

La synthèse du polymère téléchélique est similaire à celle réalisée dans l'exemple précédent EBR1 à la différence près que 1,1 mL (0,5 mmol) de 1,5-di(mésitylmagnésium)pentanediyle préparé selon l'exemple 1 (0,45 mol L⁻¹ dans le toluène) sont utilisés pour préparer la solution catalytique. 10 g de monomères visés sont consommés après 112 min de polymérisation. 10,33 g de polymère sont réellement récupérés.

### Exemple EBR3 :

La synthèse du polymère téléchélique est similaire à celle réalisée dans l'exemple précédent EBR1 à la différence près que 0,55 mL (0,25 mmol) de 1,5-di(mésitylmagnésium)pentanediyle préparé selon l'exemple 1 (0,45 mol L⁻¹ dans le toluène) sont utilisés pour préparer la solution catalytique. 10 g de monomères visés sont consommés après 86 min de polymérisation. 10,66 g de polymère sont réellement récupérés.

### Exemple EBR4 :

La synthèse du polymère téléchélique est similaire à celle réalisée dans l'exemple précédent EBR1 à la différence près que 2,3 mL (1,0 mmol) de 1,5-di(bromure de magnésium)pentanediyle préparé selon l'exemple 2 (0,43 mol L⁻¹ dans le toluène) sont utilisés comme co-catalyseur pour préparer la solution catalytique. Le système catalytique est un système catalytique non conforme à l'invention. 10 g de monomères visés sont consommés après 175 min de polymérisation. 10,57 g de polymère sont récupérés.

### Exemple EBR5 :

La synthèse du polymère téléchélique est similaire à celle réalisée dans l'exemple précédent EBR4 à la différence près que 1,15 mL (0,5 mmol) de 1,5-di(bromure de magnésium)pentanediyle préparé selon l'exemple 2 (0,43 mol L⁻¹ dans le toluène) sont utilisés comme co-catalyseur pour préparer la solution catalytique. Le système catalytique est un système catalytique non conforme à l'invention. 10 g de monomères visés sont consommés après 129 min de polymérisation. 9,50 g de polymère sont réellement récupérés.

### Exemple EBR6 :

La synthèse du polymère téléchélique est similaire à celle réalisée dans l'exemple précédent EBR4 à la différence près que 0,58 mL (0,25 mmol) de 1,5-di(bromure de magnésium)pentanediyle préparé selon l'exemple 2 (0,43 mol L⁻¹ dans le toluène) sont utilisés comme co-catalyseur pour préparer la solution catalytique. Le système catalytique est un système catalytique non conforme à l'invention. 10 g de monomères visés sont consommés après 105 min de polymérisation. 10,06 g de polymère sont réellement récupérés.

Les conditions de copolymérisation de l'éthylène et du 1,3-butadiène sont reportées dans le tableau 3. L'activité catalytique exprimée en Kg mol⁻¹ h⁻¹ est mesurée pour chaque exemple à 80 minutes de polymérisation et figure dans le tableau 3. Les caractéristiques des copolymères synthétisés figurent dans le tableau 4 et le tableau 5. La méthode SEC-THF a été utilisée pour les polymères EBR1 à EBR3 ; la méthode SEC-HT a été utilisée pour les polymères EBR4 à EBR6. La microstructure des polymères a été déterminée par RMN. Le taux d'unité éthylène, le taux d'unité de 1,3 butadiène sous la configuration 1,2 (unité 1,2), sous la configuration 1,4 (unité 1,4) et le taux d'unité 1,2-cyclohexane (unité cycle) sont exprimés en pourcentage molaire par rapport à l'ensemble des unités monomères du polymère.

### Résultats :

Les polymères des exemples PE1, PE2, EBR1 et EBR2 sont synthétisés selon un procédé conforme à l'invention, le système catalytique étant conforme à l'invention. Les polymères des exemples PE3, EBR3, EBR4 et EBR5 sont synthétisés selon un procédé non conforme à l'invention, le système catalytique n'étant pas conforme à l'invention.

Les résultats montrent que l'utilisation d'un système catalytique conforme à l'invention permet la synthèse de polymères téléchéliques par polymérisation d'une oléfine comme l'éthylène ou d'un 1,3-diène comme le 1,3-butadiène, ainsi que par leur copolymérisation. Le caractère téléchélique est montré en particulier d'une part en marquant les extrémités du polymère par réaction avec le méthanol deutéré (PE2M), d'autre part en les fonctionnalisant à l'iode (PE1F). Le caractère téléchélique est élevé, si l'on considère les taux de fonctions après réaction avec le diiode (87%) et si on considère le taux de polymère marqué (tableau 2, taux de marquage : 91%) et le nombre moyen d'extrémités deutérées par chaîne polymère (tableau 2, extrémité marquée par chaîne : 1,8 pour une valeur théorique de 2).

Par ailleurs, aussi bien pour la synthèse des homopolymères que pour la synthèse de copolymères, on note une activité catalytique du système catalytique qui est bien plus élevée avec l'utilisation d'un système catalytique conforme à l'invention qu'avec l'utilisation d'un système catalytique non conforme.

**Tableau 1**

| Polymère | Co-catalyseur | Ratio molaire Mg/Nd | Agent de modification ou composé protique | Durée (min) | Activité (Kg mol⁻¹ h⁻¹) |
|---|---|---|---|---|---|
| PE1F | DMMP | 144 | diiode | 19 | 315 |
| PE1NF | DMMP | 144 | MeOH | 19 | 315 |
| PE2M | DMMP | 231 | MeOD | 46 | 172 |
| PE2NF | DMMP | 231 | MeOH | 46 | 172 |
| PE3M | DBMP | 173 | MeOD | 49 | 118 |
| PE3NF | DBMP | 173 | MeOH | 49 | 118 |

**Tableau 2**

| Polymère | Mₙ RMN (g mol⁻¹) | Mₙ SEC (g mol⁻¹) | Ð (Mw/Mn) | Extrémité de chaîne | Taux de fonction ou marquage (%) | Extrémité marquée par chaîne |
|---|---|---|---|---|---|---|
| PE1F | 1740 | 1640 | 1,48 | I | 87 | |
| PE1NF | 1400 | 1440 | 1,62 | H | - | |
| PE2M | 1250 | 940 | 1,45 | D | 91 | 1,82 |
| PE2NF | 1250 | 940 | 1,44 | H | - | |
| PE3M | 1630 | 1480 | 1,14 | D | 89 | 1,78 |
| PE3NF | 1630 | 1530 | 1,14 | H | - | |

**Tableau 3**

| Polymère | Co-catalyseur | Ratio molaire Mg/Nd | Composé protique | Durée (min) | Activité (Kg mol⁻¹ h⁻¹) |
|---|---|---|---|---|---|
| EBR1 | DMMP | 40 | MeOH | 145 | 94 |
| EBR2 | DMMP | 20 | MeOH | 112 | 134 |
| EBR3 | DMMP | 10 | MeOH | 86 | 193 |
| EBR4 | DBMP | 40 | MeOH | 175 | 64 |
| EBR5 | DBMP | 20 | MeOH | 129 | 101 |
| EBR6 | DBMP | 10 | MeOH | 105 | 153 |

**Tableau 4**

| Polymère | Mₙ SEC (g mol⁻¹) | Ð | Extrémité de chaîne |
|---|---|---|---|
| EBR1 | 9800 | 1,29 | H |
| EBR2 | 18000 | 1,23 | H |
| EBR3 | 33100 | 1,29 | H |
| EBR4 | 13600 | 1,37 | H |
| EBR5 | 20000 | 1,44 | H |
| EBR6 | 35620 | 1,65 | H |

**Tableau 5**

| Polymère | Unité éthylène | Unité 1,2 | Unité 1,4 | Unité Cycle |
|---|---|---|---|---|
| EBR1 | 75,3 | 9,4 | 5,6 | 9,7 |
| EBR2 | 73,8 | 10,8 | 6,1 | 9,3 |
| EBR3 | 73,4 | 11,0 | 6,3 | 9,3 |
| EBR4 | 75,9 | 8,5 | 5,0 | 10,6 |
| EBR5 | 75,9 | 8,8 | 5,2 | 10,1 |
| EBR6 | 76,0 | 8,9 | 5,3 | 9,8 |

## Revendications

1. Système catalytique à base au moins :
d'un métallocène de formule (la) ou (Ib),
d'un organomagnésien à titre de co-catalyseur,
{P(Cp¹)(Cp²)Y} (la)
Cp³Cp⁴Y (Ib)
Y désignant un groupe comportant un atome d'une terre rare,
Cp¹, Cp², Cp³ et Cp⁴, identiques ou différents, étant choisis dans le groupe constitué par les groupes fluorényles, les groupes cyclopentadiényles et les groupes indényles, les groupes étant substitués ou non substitués,
P étant un groupe pontant les deux groupes Cp¹ et Cp², et comprenant un atome de silicium ou de carbone,
l'organomagnésien étant un composé de formule (II)
R^{B}-(Mg-R^{A})ₘ-Mg-R^{B} (II)
R^{B} étant différent de R^{A},
R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle,
R^{A} étant une chaîne divalente hydrocarbonée aliphatique, interrompue ou non par un ou plusieurs atomes d'oxygène ou de soufre ou bien par un ou plusieurs groupes arylènes,
m étant un nombre supérieur ou égal à 1, de préférence égal à 1.

2. Système catalytique selon la revendication 1 dans lequel Cp¹ et Cp² sont identiques et sont choisis dans le groupe constitué par les groupes fluorényles substitués et le groupe fluorényle non substitué de formule C₁₃H₈, de préférence représentent chacun un groupe fluorényle non substitué de formule C₁₃H₈.

3. Système catalytique selon l'une quelconque des revendications 1 à 2, dans lequel le symbole Y représente le groupe Met-G, avec Met désignant l'atome de la terre rare et G désignant un groupe comprenant le motif borohydrure BH₄ ou désignant un atome d'halogène choisi dans le groupe constitué par le chlore, le fluor, le brome et l'iode.

4. Système catalytique selon la revendication 3 dans lequel G désigne un atome de chlore ou le groupe de formule (III)
(BH₄)_{(1+y)-}L_{y}-Nₓ (III)
dans laquelle
L représente un métal alcalin choisi dans le groupe constitué par le lithium, le sodium et le potassium,
N représente une molécule d'un éther, de préférence diéthyléther ou tétrahydrofurane,
x, nombre entier ou non, est égal ou supérieur à 0,
y, nombre entier, est égal ou supérieur à 0.

5. Système catalytique selon l'une quelconque des revendications 1 à 4 dans lequel la terre rare est un lanthanide dont le numéro atomique varie de 57 à 71, de préférence le néodyme.

6. Système catalytique selon l'une quelconque des revendications 1 à 5 dans lequel le pont P répond à la formule ZR¹R², Z représentant un atome de silicium ou de carbone, R¹ et R², identiques ou différents, représentant chacun un groupe alkyle comprenant de 1 à 20 atomes de carbone, de préférence un méthyle.

7. Système catalytique selon l'une quelconque des revendications 1 à 6 dans lequel le métallocène est de formule (III-1), (III-2), (III-3), (III-4) ou (III-5) :
[Me₂Si(Flu)₂Nd(µ-BH₄)₂Li(THF)] (III-1)
[{Me₂SiFlu₂Nd(µ-BH₄)₂Li(THF)}₂] (III-2)
[Me₂SiFlu₂Nd(µ-BH₄)(THF)] (III-3)
[{Me₂SiFlu₂Nd(µ-BH₄)(THF)}₂] (III-4)
[Me₂SiFlu₂Nd(µ-BH₄)] (III-5)
Flu représentant le groupe C₁₃H₈.

8. Système catalytique selon l'une quelconque des revendications 1 à 7 dans lequel si l'un des 2 atomes de carbone du noyau benzénique de R^{B} en ortho du magnésium est substitué par un isopropyle, le deuxième atome de carbone du noyau benzénique de R^{B} en ortho du magnésium n'est pas substitué par un isopropyle.

9. Système catalytique selon l'une quelconque des revendications 1 à 8 dans lequel les atomes de carbone du noyau benzénique de R^{B} en ortho du magnésium sont substitués par un méthyle ou un éthyle, de préférence un méthyle.

10. Système catalytique selon l'une quelconque des revendications 1 à 9 dans lequel l'organomagnésien est de formule (IV-m) 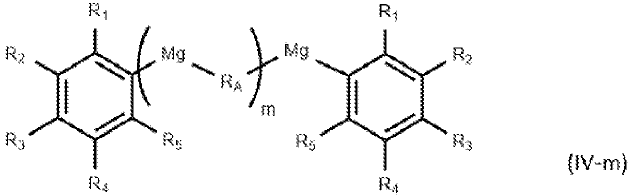
R₁ et R₅, identiques ou différents, représentant un méthyle ou un éthyle, de préférence un méthyle,
R₂, R₃ et R₄, identiques ou différents, étant un atome d'hydrogène ou un alkyle,
R^{A} étant une chaîne divalente hydrocarbonée aliphatique, interrompue ou non par un ou plusieurs atomes d'oxygène ou de soufre ou bien par un ou plusieurs groupes arylènes,
m étant un nombre supérieur ou égal à 1, de préférence égal à 1.

11. Système catalytique selon l'une quelconque des revendications 1 à 10 dans lequel R^{A} est un alcanediyle, ramifié ou linéaire, un cycloalcanediyle ou un radical xylènediyle, de préférence un alcanediyle.

12. Procédé de préparation d'un premier polymère téléchélique qui comprend une étape de polymérisation d'un monomère M en présence d'un système catalytique défini à l'une quelconque des revendications 1 à 11, le monomère M étant choisi dans le groupe des monomères constitués par les 1,3-diènes, l'éthylène, les α-monooléfines et leurs mélanges.

13. Procédé de préparation d'un deuxième polymère téléchélique, qui comprend une étape de polymérisation d'un monomère M en présence d'un système catalytique défini à l'une quelconque des revendications 1 à 11, laquelle étape de polymérisation est suivie d'une étape de fonctionnalisation avec un agent de modification, le monomère M étant choisi dans le groupe des monomères constitués par les 1,3-diènes, l'éthylène, les α-monooléfines et leurs mélanges.

14. Procédé de préparation d'un polymère qui comprend une étape de polymérisation d'un monomère M en présence d'un système catalytique défini à l'une quelconque des revendications 1 à 11 et une réaction de terminaison avec un composé protique, le monomère M étant choisi dans le groupe des monomères constitués par les 1,3-diènes, l'éthylène, les α-monooléfines et leurs mélanges.

15. Polymère téléchélique de formule (V)
R^{B}-Mg-poly-R^{A}-poly-Mg-R^{B} (V)
R^{B} et R^{A} étant définis selon la revendication 1 ou selon l'une quelconque des revendications 8 à 11,
la dénomination « poly » désignant une chaîne polymère d'un 1,3-diène, d'éthylène, d'une α-monooléfines ou de leurs mélanges, de préférence une chaîne polymère d'éthylène ou une chaîne polymère d'un 1,3-diène et d'éthylène ou encore une chaîne polymère d'un 1,3-diène, d'éthylène et d'une α-monooléfine.

## Patentansprüche

1. Katalytisches System auf Basis von mindestens:
einem Metallocen der Formel (la) oder (Ib),
einer Organomagnesiumverbindung als Cokatalysator,
{P(Cp¹)(Cp²)Y} (Ia)
Cp³Cp⁴Y (Ib)
wobei Y für eine Gruppe steht, die ein Seltenerdmetallatom umfasst,
Cp¹, Cp², Cp³ und Cp⁴ gleich oder verschieden sind und aus der Gruppe bestehend aus Fluorenylgruppen, Cyclopentadienylgruppen und Indenylgruppen ausgewählt sind, wobei die Gruppen substituiert oder unsubstituiert sind,
wobei P für eine Gruppe steht, die die beiden Gruppen Cp¹ und Cp² verbrückt und ein Silicium- oder Kohlenstoffatom umfasst,
wobei es sich bei der Organomagnesiumverbindung um eine Verbindung der Formel (II) handelt:
R^{B}-(Mg-R^{A})ₘ-Mg-R^{B} (II)
wobei R^{B} von R^{A} verschieden ist,
wobei R^{B} einen durch das Magnesiumatom substituierten Benzolkern umfasst, wobei eines der Kohlenstoffatome des Benzolkerns in ortho-Position zu dem Magnesium durch ein Methyl, ein Ethyl oder ein Isopropyl substituiert ist oder mit dem Kohlenstoffatom, das sein nächster Nachbar ist und das in meta-Position zu dem Magnesium steht, einen Ring bildet, wobei das andere Kohlenstoffatom des Benzolkerns in ortho-Position zu dem Magnesium durch ein Methyl, ein Ethyl oder ein Isopropyl substituiert ist, wobei R^{A} für eine zweiwertige aliphatische Kohlenwasserstoffkette, die gegebenenfalls durch ein oder mehrere Sauerstoff- oder Schwefelatome oder auch durch eine oder mehrere Arylengruppen unterbrochen ist, steht,
wobei m für eine Zahl größer oder gleich 1 und vorzugsweise gleich 1 steht.

2. Katalytisches System nach Anspruch 1, wobei Cp¹ und Cp² gleich sind und aus der Gruppe bestehend aus substituierten Fluorenylgruppen und der unsubstituierten Fluorenylgruppe der Formel C₁₃H₈ ausgewählt sind und vorzugsweise jeweils für eine unsubstituierte Fluorenylgruppe der Formel C₁₃H₈ stehen.

3. Katalytisches System nach einem der Ansprüche 1 bis 2, wobei das Symbol Y für die Gruppe Met-G steht, wobei Met für ein Seltenerdmetallatom steht und G für eine Gruppe, die die Borhydrid-Einheit BH₄ umfasst, oder ein Halogenatom, das aus der Gruppe bestehend aus Chlor, Fluor, Brom und Iod ausgewählt ist, steht.

4. Katalytisches System nach Anspruch 3, wobei G für ein Chloratom oder die Gruppe der Formel (III) steht:
(BH₄)_{(1+y)-}L_{y}-Nₓ (III)
in der
L für ein Alkalimetall, das aus der Gruppe bestehend aus Lithium, Natrium und Kalium ausgewählt ist, steht,
N für ein Molekül eines Ethers, vorzugsweise Diethyleter oder Tetrahydrofuran, steht,
x ganzzahlig oder nicht ganzzahlig ist und gleich oder größer als 0 ist,
y ganzzahlig ist und gleich oder größer als 0 ist.

5. Katalytisches System nach einem der Ansprüche 1 bis 4, wobei es sich bei dem Seltenerdmetall um ein Lanthanid mit einer Ordnungszahl von 57 bis 71, vorzugsweise Neodym, handelt.

6. Katalytisches System nach einem der Ansprüche 1 bis 5, wobei die Brücke P der Formel ZR¹R² entspricht, wobei Z für ein Silicium- oder Kohlenstoffatom steht und R¹ und R² gleich oder verschieden sind und jeweils für eine Alkylgruppe mit 1 bis 20 Kohlenstoffatomen, vorzugsweise ein Methyl, stehen.

7. Katalytisches System nach einem der Ansprüche 1 bis 6, wobei das Metallocen der Formel (III-1), (III-2), (111-3), (111-4) oder (III-5) entspricht:
[Me₂Si(Flu)₂Nd(µ-BH₄)₂Li(THF)] (III-1)
[{Me₂SiFlu₂Nd(µ-BH₄)₂Li(THF)}₂] (III-2)
[Me₂SiFlu₂Nd(µ-BH₄)(THF)] (III-3)
[{Me₂SiFlu₂Nd(µ-BH₄)(THF)}₂] (III-4)
[Me₂SiFlu₂Nd(µ-BH₄)] (III-5)
wobei Flu für die Gruppe C₁₃H₈ steht.

8. Katalytisches System nach einem der Ansprüche 1 bis 7, wobei dann, wenn eines der 2 Kohlenstoffatome des Benzolkerns von R^{B} in ortho-Position zu dem Magnesium durch ein Isopropyl substituiert ist, das zweite Kohlenstoffatom des Benzolkerns von R^{B} in ortho-Position zu dem Magnesium nicht durch ein Isopropyl substituiert ist.

9. Katalytisches System nach einem der Ansprüche 1 bis 8, wobei die Kohlenstoffatome des Benzolkerns von R^{B} in ortho-Position zu dem Magnesium durch ein Methyl oder ein Ethyl, vorzugsweise ein Methyl, substituiert sind.

10. Katalytisches System nach einem der Ansprüche 1 bis 9, wobei die Organomagnesiumverbindung die Formel (IV-m) aufweist: 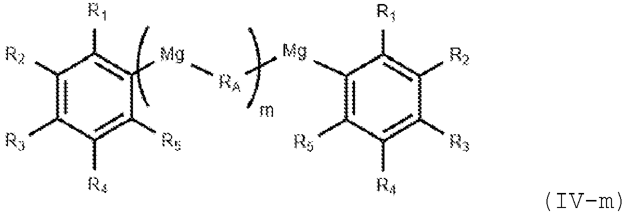
wobei R₁ und R₅ gleich oder verschieden sind und für ein Methyl oder ein Ethyl, vorzugsweise ein Methyl, stehen,
wobei R₂, R₃ und R₄ gleich oder verschieden sind und für ein Wasserstoffatom oder ein Alkyl stehen,
wobei R^{A} für eine zweiwertige aliphatische Kohlenwasserstoffkette, die gegebenenfalls durch ein oder mehrere Sauerstoff- oder Schwefelatome oder auch durch eine oder mehrere Arylengruppen unterbrochen ist, steht,
wobei m für eine Zahl größer oder gleich 1 und vorzugsweise gleich 1 steht.

11. Katalytisches System nach einem der Ansprüche 1 bis 10, wobei R^{A} für ein verzweigtes oder lineares Alkandiyl, ein Cycloalkandiyl oder einen Xyloldiylrest, vorzugsweise ein Alkandiyl, steht.

12. Verfahren zur Herstellung eines ersten Telechel-Polymers, das einen Schritt der Polymerisation eines Monomers M in Gegenwart eines katalytischen Systems gemäß einem der Ansprüche 1 bis 11 umfasst, wobei das Monomer M aus der Gruppe von Monomeren bestehend aus 1,3-Dienen, Ethylen, α-Monoolefinen und Mischungen davon ausgewählt wird.

13. Verfahren zur Herstellung eines zweiten Telechel-Polymers, das einen Schritt der Polymerisation eines Monomers M in Gegenwart eines katalytischen Systems gemäß einem der Ansprüche 1 bis 11 umfasst, wobei auf den Polymerisationsschritt ein Schritt der Funktionalisierung mit einem Modifizierungsmittel folgt, wobei das Monomer M aus der Gruppe von Monomeren bestehend aus 1,3-Dienen, Ethylen, α-Monoolefinen und Mischungen davon ausgewählt wird.

14. Verfahren zur Herstellung eines Polymers, das einen Schritt der Polymerisation eines Monomers M in Gegenwart eines katalytischen Systems gemäß einem der Ansprüche 1 bis 11 und eine Abbruchreaktion mit einer protischen Verbindung umfasst, wobei das Monomer M aus der Gruppe von Monomeren bestehend aus 1,3-Dienen, Ethylen, α-Monoolefinen und Mischungen davon ausgewählt wird.

15. Telechel-Polymer der Formel (V)
R^{B}-Mg-poly-R^{A}-poly-Mg-R^{B} (V)
wobei R^{B} und R^{A} gemäß Anspruch 1 oder gemäß einem der Ansprüche 8 bis 11 definiert sind,
wobei der Begriff "poly" eine Polymerkette aus einem 1,3-Dien, Ethylen, einem α-Monoolefin oder Mischungen davon, vorzugsweise eine Polymerkette aus Ethylen oder eine Polymerkette aus einem 1,3-Dien und Ethylen oder auch eine Polymerkette aus einem 1,3-Dien, Ethylen und einem α-Monoolefin, bezeichnet.

## Claims

1. Catalytic system based at least:
on a metallocene of formula (Ia) or (Ib),
on an organomagnesium reagent as co-catalyst,
{P(Cp¹)(Cp²)Y} (Ia)
Cp³Cp⁴Y (Ib)
Y denoting a group including a rare-earth metal atom,
Cp¹, Cp², Cp³ and Cp⁴, which are identical or different, being chosen from the group consisting of fluorenyl groups, cyclopentadienyl groups and indenyl groups, the groups being substituted or unsubstituted,
P being a group bridging the two groups Cp¹ and Cp² and comprising a silicon or carbon atom,
the organomagnesium reagent being a compound of formula (II)
R^{B}-(Mg-R^{A})ₘ-Mg-R^{B} (II)
R^{B} being different from R^{A},
R^{B} comprising a benzene nucleus substituted with the magnesium atom, one of the carbon atoms of the benzene nucleus ortho to the magnesium being substituted with a methyl, an ethyl, an isopropyl or forming a ring with the carbon atom which is its closest neighbour and which is meta to the magnesium, the other carbon atom of the benzene nucleus ortho to the magnesium being substituted with a methyl, an ethyl or an isopropyl,
R^{A} being a divalent aliphatic hydrocarbon-based chain, interrupted or not with one or more oxygen or sulfur atoms or with one or more arylene groups,
m being a number greater than or equal to 1 and preferably equal to 1.

2. Catalytic system according to Claim 1, in which Cp¹ and Cp² are identical and are chosen from the group consisting of substituted fluorenyl groups and the unsubstituted fluorenyl group of formula C₁₃H₈, and each preferably represent an unsubstituted fluorenyl group of formula C₁₃H₈.

3. Catalytic system according to either of Claims 1 and 2, in which the symbol Y represents the group Met-G, with Met denoting the rare-earth metal atom and G denoting a group comprising the borohydride BH₄ unit or denoting a halogen atom chosen from the group consisting of chlorine, fluorine, bromine and iodine.

4. Catalytic system according to Claim 3, in which G denotes a chlorine atom or the group of formula (III)
(BH₄)_{(1+y)-}L_{y}-Nₓ (III)
in which
L represents an alkali metal chosen from the group consisting of lithium, sodium and potassium,
N represents a molecule of an ether, preferably diethyl ether or tetrahydrofuran,
x, which may or may not be an integer, is greater than or equal to 0,
y, which is an integer, is greater than or equal to 0.

5. Catalytic system according to any one of Claims 1 to 4, in which the rare-earth metal is a lanthanide, the atomic number of which ranges from 57 to 71, preferably neodymium.

6. Catalytic system according to any one of Claims 1 to 5, in which the bridge P corresponds to the formula ZR¹R², Z representing a silicon or carbon atom and R¹ and R², which are identical or different, each representing an alkyl group comprising from 1 to 20 carbon atoms, preferably a methyl.

7. Catalytic system according to any one of Claims 1 to 6, in which the metallocene is of formula (III-1), (III-2), (III-3), (III-4) or (III-5):
[Me₂Si(Flu)₂Nd(µ-BH₄)₂Li(THF)] (III-1)
[{Me₂SiFlu₂Nd(µ-BH₄)₂Li(THF)}₂] (III-2)
[Me₂SiFlu₂Nd(µ-BH₄)(THF)] (III-3)
[{Me₂SiFlu₂Nd(µ-BH₄)(THF)}₂] (III-4)
[Me₂SiFlu₂Nd(µ-BH₄)] (III-5)
Flu representing the C₁₃H₈ group.

8. Catalytic system according to any one of Claims 1 to 7, in which, if one of the two carbon atoms of the benzene nucleus of R^{B} ortho to the magnesium is substituted with an isopropyl, the second carbon atom of the benzene nucleus of R^{B} ortho to the magnesium is not substituted with an isopropyl.

9. Catalytic system according to any one of Claims 1 to 8, in which the carbon atoms of the benzene nucleus of R^{B} ortho to the magnesium are substituted with a methyl or an ethyl, preferably a methyl.

10. Catalytic system according to any one of Claims 1 to 9, in which the organomagnesium reagent is of formula (IV-m) 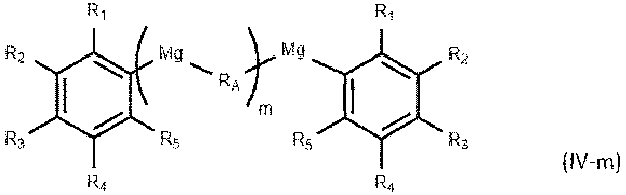
R₁ and R₅, which are identical or different, represent a methyl or an ethyl, preferably a methyl,
R₂, R₃ and R₄, which are identical or different, being a hydrogen atom or an alkyl,
R^{A} being a divalent aliphatic hydrocarbon-based chain, interrupted or not with one or more oxygen or sulfur atoms or with one or more arylene groups,
m being a number greater than or equal to 1 and preferably equal to 1.

11. Catalytic system according to any one of Claims 1 to 10, in which R^{A} is a branched or linear alkanediyl, cycloalkanediyl or xylenediyl radical, preferably an alkanediyl.

12. Process for preparing a first telechelic polymer, which comprises a step of polymerizing a monomer M in the presence of a catalytic system defined in any one of Claims 1 to 11, the monomer M being chosen from the group of monomers consisting of 1,3-dienes, ethylene, α-monoolefins and mixtures thereof.

13. Process for preparing a second telechelic polymer, which comprises a step of polymerizing a monomer M in the presence of a catalytic system defined in any one of Claims 1 to 11, this polymerization step being followed by a step of functionalization with a modifying agent, the monomer M being chosen from the group of monomers consisting of 1,3-dienes, ethylene, α-monoolefins and mixtures thereof.

14. Process for preparing a polymer, which comprises a step of polymerizing a monomer M in the presence of a catalytic system defined in any one of Claims 1 to 11 and a termination reaction with a protic compound, the monomer M being chosen from the group of monomers consisting of 1,3-dienes, ethylene, α-monoolefins and mixtures thereof.

15. Telechelic polymer of formula (V)
R^{B}-Mg-poly-R^{A}-poly-Mg-R^{B} (V)
R^{A} and R^{B} being defined according to Claim 1 or any one of Claims 8 to 11,
the name "poly" denoting a polymer chain of a 1,3-diene, of ethylene or of an α-monoolefin, or mixtures thereof, preferably a polymer chain of ethylene or a polymer chain of a 1,3-diene and ethylene or a polymer chain of a 1,3-diene, ethylene and an α-monoolefin.
